# EUROPEAN PATENT APPLICATION

(11) **EP 4 589 822 A1**
(43) Date of publication of application: **23.07.2025**
(21) Application number: 23864703.6
(22) Date of filing: 13.09.2023
(51) Int. Cl.: H02K 5/20, H02K 9/06

(54) **POWER HEAD AND POWER SYSTEM**

(30) Priority: 16.09.2022 CN 202211132147; 16.09.2022 CN 202222465307 U; 16.09.2022 CN 202211132238; 16.09.2022 CN 202222464220 U; 16.09.2022 CN 202222468928 U; 28.12.2022 CN 202211713855; 28.12.2022 CN 202223549911 U
(71) Applicant: Greenworks (Jiangsu) Co., Ltd., Changzhou, Jiangsu 213023 (CN)
(72) Inventor: JIANG, Feng, Changzhou, Jiangsu 213023 (CN); FENG, Shouchuan, Changzhou, Jiangsu 213023 (CN); BAO, Jianru, Changzhou, Jiangsu 213023 (CN); TAO, Wen, Changzhou, Jiangsu 213023 (CN)
(74) Representative: Bergenstråhle & Partners AB
(86) International application number: PCT/CN2023/118434
(87) International publication number: WO 2024/055971

(57) **Abstract**

A power head includes a motor bracket, a housing, a motor and a battery pack. The motor bracket is provided with a motor assembly cavity, and a bottom of the motor bracket is provided with a machine installation surface. The housing is fixed above the motor bracket, and a gap is formed between the housing and the motor bracket. The motor includes a motor stator, a motor rotor and an output shaft. The motor stator is fixedly assembled in the motor assembly cavity. The motor rotor is assembled in the motor assembly cavity and rotates with respect to the motor stator. The output shaft is fixed with the motor rotor, and the output shaft is substantially parallel to the machine installation surface. The battery pack is installed in the housing to provide energy for the power head.

## Description

### CROSS REFERENCE TO RELATED APPLICATION

The present application is a continuation Application of PCT application No. PCT/CN2023/118434 filed on September 13, 2023, which claims the benefit of CN202211132147.7 filed on September 16, 2022, CN202222465307.1 filed on September 16, 2022, CN202211132238.0 filed on September 16, 2022, CN202222464220.2 filed on September 16, 2022, CN202222468928.5 filed on September 16, 2022, CN202211713855.X filed on December 28, 2022, and CN202223549911.9 filed on December 28, 2022. All the above are hereby incorporated by reference for all purposes.

### TECHNICAL FIELD

The disclosure relates to a field of power heads, and in particular to a power head and a power system.

### BACKGROUND

The power devices of conventional power tools, especially garden tools, are divided into two categories: one is an engine that uses fuel such as gasoline or diesel as energy, and the other is a motor that uses batteries as energy. Fuel engines have problems such as inconvenient operation, large vibration, high noise, serious pollution, and safety hazards in the storage of gasoline and diesel. Therefore, the conventional power heads are gradually being replaced by power heads driven by lithium battery motors.

Lithium battery-driven motors have the advantages of low pollution, low noise and easy operation. With the increasing emphasis on environmental protection, green, environmentally friendly and carbon-reducing lifestyles and working methods are being advocated. In order to meet the use requirements of higher power tools, the conventional lithium battery driven motor is assembled on the power head, and the external rotor needs to be assembled in a protected cavity, which brings about problems such as heat concentration, difficulty in heat dissipation, and complex assembly. Based on the above problems, a lithium battery-driven power head with reasonable structure, convenient assembly and good heat dissipation effect is needed.

### SUMMARY

The disclosure provides a power head to solve technical problems of a conventional power head such as unreasonable structure, heat concentration, difficulty in heat dissipation, and complex assembly.

The disclosure provides the power head. The power head includes a motor bracket, a housing, a motor and a battery pack. The motor bracket is provided with a motor assembly cavity, and a bottom of the motor bracket is provided with a machine installation surface. The housing is fixed above the motor bracket, and a gap is formed between the housing and the motor bracket. The motor includes a motor stator, a motor rotor and an output shaft. The motor stator is fixedly assembled in the motor assembly cavity. The motor rotor is assembled in the motor assembly cavity and rotates respect to the motor stator. The output shaft is fixed with the motor rotor, and the output shaft is substantially parallel to the machine installation surface. The battery pack is installed in the housing to provide energy for the power head.

In an embodiment of the disclosure, the motor bracket is integrally formed, and includes a motor assembly part provided with the motor assembly cavity, a whole machine installation part arranged below the motor assembly part, and a battery supporting part arranged on a side of the motor assembly part, and the battery pack is arranged above the battery supporting part.

In an embodiment of the disclosure, the motor assembly part is provided with a installation block, the installation block is fixed to a bottom surface of the housing, the gap is arranged between the housing and an outer wall of the motor assembly part, a first accommodating cavity to install a control module is arranged in the housing, the first accommodating cavity is arranged above the motor assembly cavity, the first accommodating cavity and the motor assembly cavity are connected through a second internal opening arranged in the housing and a first internal opening arranged in the motor bracket, and the housing is in contact with a wall of the motor assembly cavity through the installation block and the first and second internal openings.

In an embodiment of the disclosure, the motor bracket further includes a reinforcing supporting part, a first end of the reinforcing supporting part is arranged on the whole machine installation part, and a second end of the reinforcing supporting part is arranged on a bottom surface of the battery supporting part.

In an embodiment of the disclosure, a center of gravity of the power head is located between left and right offset surfaces of the power head perpendicular to a center plane of the output shaft, and a distance between the left or right offset surfaces and the center plane is no more than 15 percent of a width of the power head.

In an embodiment of the disclosure, a center of gravity of the power head is located between the motor assembly cavity and the housing in a longitudinal direction.

In an embodiment of the disclosure, a center of gravity of the power head is located between an outer wall of the motor assembly cavity and the battery pack.

In an embodiment of the disclosure, a maximum output power range of the motor is from 3 kW to 5kW, the battery pack is capable of being installed on a handheld power tool to provide power to the handheld power tool, the battery pack includes at least one group of battery cells, the battery cells are connected in series, a maximum output power of the battery cells is less than or equal to 2 kW, a voltage of the battery pack is from 80 V to 82 V, a control wire is arranged between the power head and the power tool driven by the power head, and an on-off of the power head are controlled according to a state of the power tool.

In an embodiment of the disclosure, the motor assembly cavity is communicated with outside air through a first external opening. A first accommodating cavity to assemble the control module is arranged in the housing, and a second external opening is arranged on the first accommodating cavity. The heat dissipation passage is communicated in sequence to the first external opening, the motor assembly cavity, the first accommodating cavity, and the second external opening.

In an embodiment of the disclosure, a first fan is arranged in the heat dissipation passage, and the first fan is arranged on the output shaft of the motor rotor.

In an embodiment of the disclosure, the first fan is arranged at a tail end of the output shaft and at a top of the first external opening, the outside air enters the first accommodating cavity through the second external opening, flows through a coil winding assembled on the motor assembly cavity, and is then driven by the first fan to be discharged through the first external opening, a second fan is arranged in the heat dissipation passage, the second fan is arranged on a side wall of the first accommodating cavity, and an air outlet direction of the second fan is perpendicular to a ventilation direction of the second external opening.

In an embodiment of the disclosure, the first fan is arranged at a front end of the output shaft, and the first accommodating cavity and the motor assembly cavity are respectively arranged on two sides of the first fan in the heat dissipation passage.

In an embodiment of the disclosure, the heat dissipation passage includes a first internal opening and a second internal opening.

The first internal opening is arranged at a top of the motor assembly cavity on a side away from the first external opening.

The second internal opening is communicated with the first internal opening, and the second internal opening is arranged at a bottom of the first accommodating cavity on a side away from the second external opening.

In an embodiment of the disclosure, the first external opening passes through the motor bracket downwards, a ventilation groove is arranged on a bottom side wall of the motor bracket, the first external opening is communicated with the outside air through the ventilation groove, and the second external opening is arranged on a bottom surface of the housing.

In an embodiment of the disclosure, the power head further includes a shock absorbing device and the shock absorbing device includes a shock absorbing pad. Wherein, the housing and the motor bracket are connected through the shock absorbing device, and the shock absorbing pad is arranged between the housing and the motor bracket.

In an embodiment of the disclosure, the shock absorbing device includes two threaded rods, the two threaded rods are respectively arranged on two sides of the shock absorbing pad and are respectively connected with the corresponding housing and the motor bracket on the two sides of the shock absorbing pad, a first threaded hole is arranged on the motor bracket, a first through hole is arranged on the housing, the threaded rod on a first side of the shock absorbing pad is matched with the first threaded hole, and the threaded rod on a second side of the shock absorbing pad passes through the first through hole and is threadedly connected with a first nut.

In an embodiment of the disclosure, the power head further includes a functional port. When the functional port is connected with an external charger, the external charger is capable of charging the battery pack, and when the functional port is connected with the external extended battery pack, the extended battery pack is capable of providing electrical energy to the motor together with the battery pack.

In an embodiment of the disclosure, the power head further includes a control module. When the functional port is connected with the external extended battery pack, the control module is configured to read information of extended battery pack and the battery pack to control a working state of the extended battery pack and the battery pack, the working state includes that the extended battery pack and the battery pack discharge together and the information of the extended battery pack discharges independently, the extended battery pack and the battery pack includes respective battery voltage, temperature, and discharging current.

In an embodiment of the disclosure, during an initial operation, when a voltage difference between the extended battery pack and the battery pack is not greater than a first threshold, the extended battery pack and the battery pack are discharged together, and when the voltage difference between the extended battery pack and the battery pack is greater than the first threshold, the one with a higher voltage between the extended battery pack and the battery pack is discharged first, until the voltage difference is not greater than a second threshold, and then the extended battery pack and the battery pack are discharged together.

In an embodiment of the disclosure, when the battery pack is not installed or is in an unavailable state, the extended battery pack discharges independently, the control module communicates to inform a subsequent driving board with the information of the extended battery pack, and the subsequent driving board adjusts an output power according to the information of the extended battery pack.

In an embodiment of the disclosure, the control module detects numbers of the battery packs inserted, if only one battery pack is inserted, the inserted battery pack is charged, if two battery packs are inserted, a voltage difference between the two battery packs is determined, if the voltage difference between the two battery packs is within a third threshold range, the extended battery pack charges the two battery packs simultaneously, if the voltage difference between the two battery packs exceeds a second threshold range, the battery pack with a lower voltage is charged until the voltage difference between the two battery packs is within a fourth threshold range, then the two battery packs are charged simultaneously.

The disclosure further provides a power system, and the power system includes the power head and an external device. The power head includes the motor bracket, the housing, the motor and the battery pack.

The motor bracket is provided with the motor assembly cavity, and the bottom of the motor bracket is provided with the machine installation surface.

The housing is fixed above the motor bracket, and the gap is formed between the housing and the motor bracket.

The motor includes the motor stator, the motor rotor and the output shaft.

The motor stator is fixedly assembled in the motor assembly cavity.

The motor rotor is assembled in the motor assembly cavity and rotates respect to the motor stator.

The output shaft is fixed with the motor rotor, and the output shaft is substantially parallel to the machine installation surface.

The battery pack is installed in the housing to provide energy for the power head.

The external device includes an extended battery pack and/or an external charger, and the external charger includes at least one of an AC/DC charger, a solar inverter, and a DC/DC charger.

Wherein, when a functional port is connected with the external charger, the external charger is capable of charging the battery pack.

When the functional port is connected with the external extended battery pack, the extended battery pack is capable of providing electrical energy to a motor assembly together with the battery pack.

Beneficial effects of the disclosure are that:

a power head arrangement of the disclosure is different from a conventional arrangement, the motor assembly cavity is arranged in the housing of the disclosure, the motor rotor and the motor stator are directly assembled in the motor assembly cavity, and the housing is both the housing of the motor and the housing of the entire power head, thereby effectively improving a heat dissipation capacity of the motor and solving the problem of heat concentrated in a protective cavity. The power head of the disclosure has a compact and reasonable structure, is easy to assemble and install, and may replace a conventional gasoline engine to solve a problem of large vibration, high noise, and serious pollution of the conventional engine.

### BRIEF DESCRIPTION OF THE DRAWINGS

In order to explain technical solutions of embodiments of the disclosure more clearly, the following will briefly introduce drawings used in a description of the embodiments or the conventional art. Obviously, the drawings in the following description are only some embodiments of the disclosure. For those of ordinary skill in the art, other drawings may be obtained based on these drawings without creative work.
FIG. 1 is a first perspective schematic view of a power head according to at least one embodiment of the disclosure.
FIG. 2 is a first schematic structural view of a power head according to at least one embodiment of the disclosure.
FIG. 3 is a first front view of a power head according to at least one embodiment of the disclosure.
FIG. 4 is a first rear view of a power head according to at least one embodiment of the disclosure.
FIG. 5 is a top view of a power head according to at least one embodiment of the disclosure.
FIG. 6 is a left view of a power head according to at least one embodiment of the disclosure.
FIG. 7 is a first partial schematic structural view of a power head according to at least one embodiment of the disclosure.

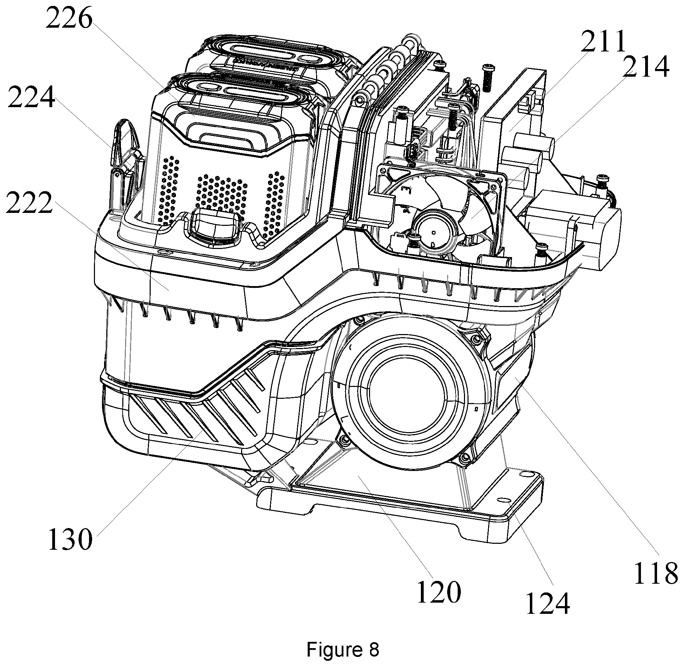

FIG. 8 is a first partial structural perspective view of a power head according to at least one embodiment of the disclosure.

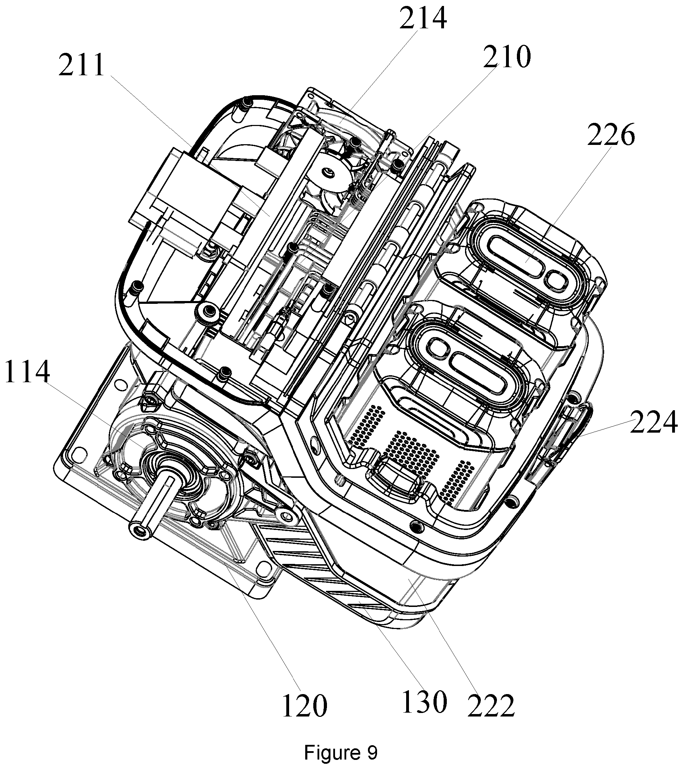

FIG. 9 is a partial schematic structural view of a power head from another angle according to at least one embodiment of the disclosure.
FIG. 10 is a first schematic view of a motor bracket according to at least one embodiment of the disclosure.

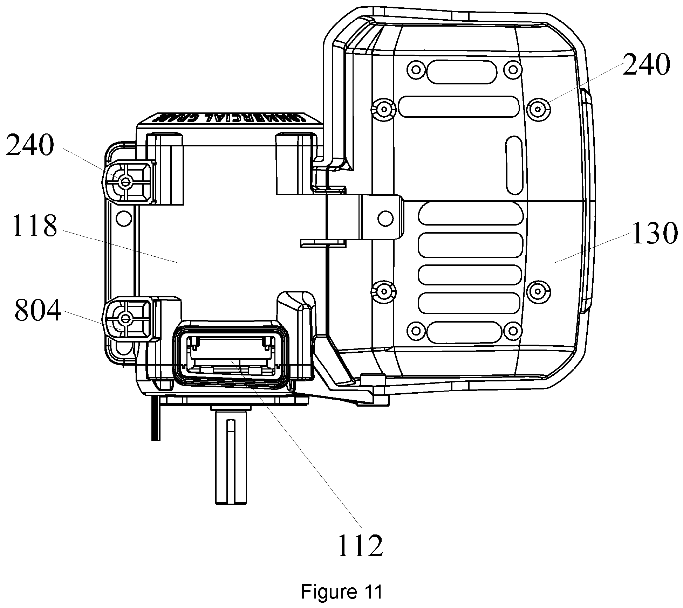

FIG. 11 is a top view of a motor bracket according to at least one embodiment of the disclosure.
FIG. 12 is a first perspective view of a motor bracket according to at least one embodiment of the disclosure.
FIG. 13 is a schematic view of a housing body according to at least one embodiment of the disclosure.
FIG. 14 is a partial schematic structural view of a housing body according to at least one embodiment of the disclosure.
FIG. 15 is a cross-sectional view taken along line A-A of FIG. 3.
FIG. 16 is an enlarged view of an area B in FIG. 15.
FIG. 17 is a second perspective schematic view of a power head according to at least one embodiment of the disclosure.

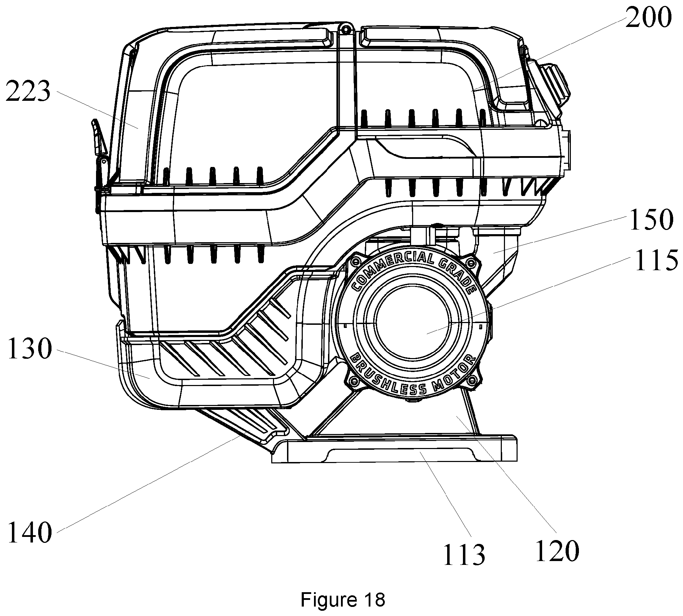

FIG. 18 is a second rear view of a power head according to at least one embodiment of the disclosure.

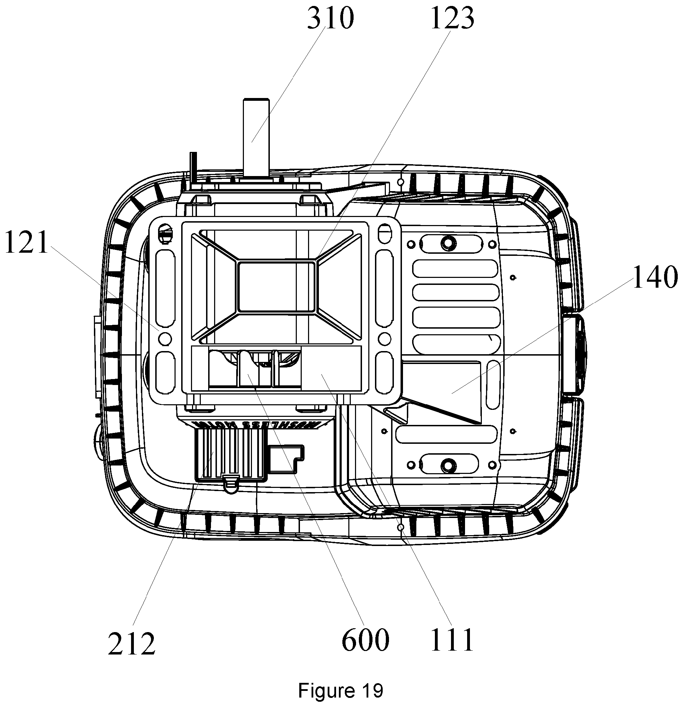

FIG. 19 is a bottom view of a power head according to at least one embodiment of the disclosure.
FIG. 20 is a perspective schematic view of a power head after being cut in a vertical direction according to at least one embodiment of the disclosure.
FIG. 21 is a schematic view of a power head after being cut in a vertical direction according to at least one embodiment of the disclosure.

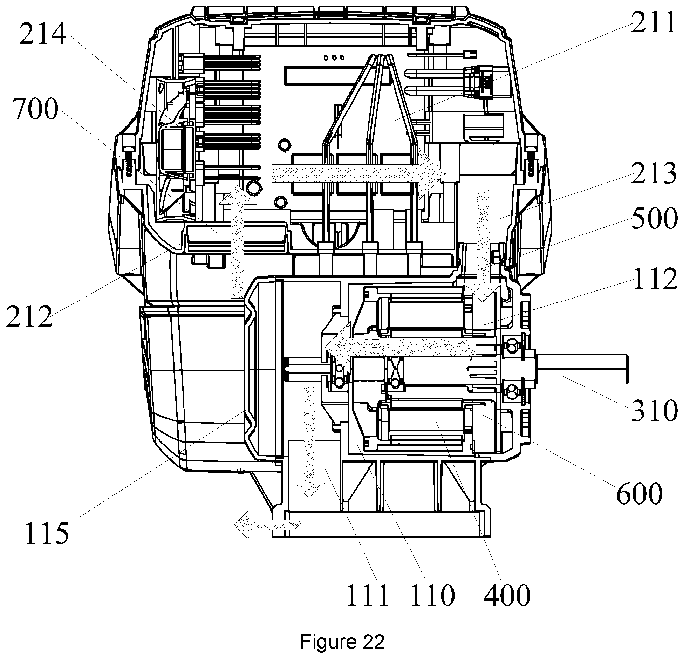

FIG. 22 is a perspective schematic view of a power head being cut in the vertical direction according to another embodiment of the disclosure.

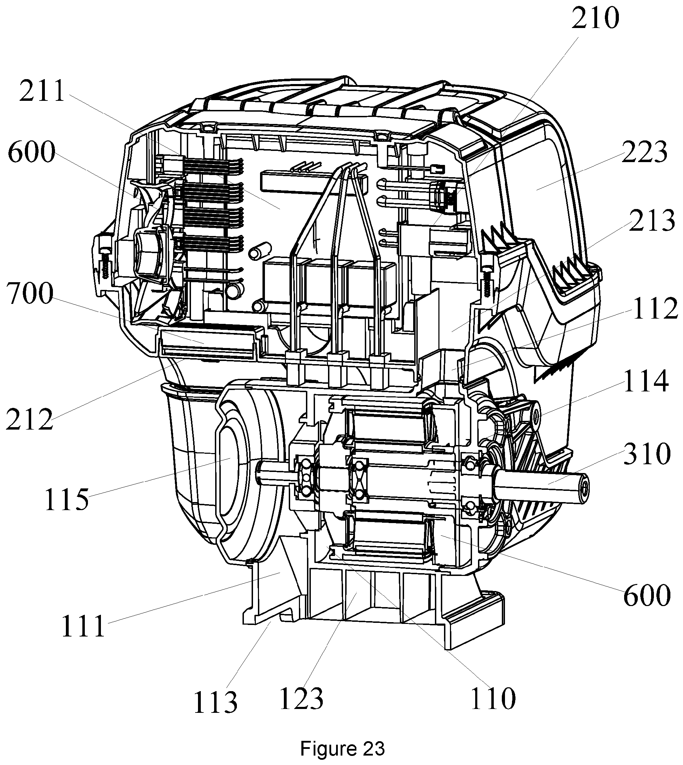

FIG. 23 is a schematic view of a power head after being cut in a vertical direction according to another embodiment of the disclosure.
FIG. 24 is a second partial structural perspective view of the power head according to at least one embodiment of the disclosure.
FIG. 25 is a second partial schematic structural view of a power head according to at least one embodiment of the disclosure.
FIG. 26 is a second schematic view of a motor bracket according to at least one embodiment of the disclosure.

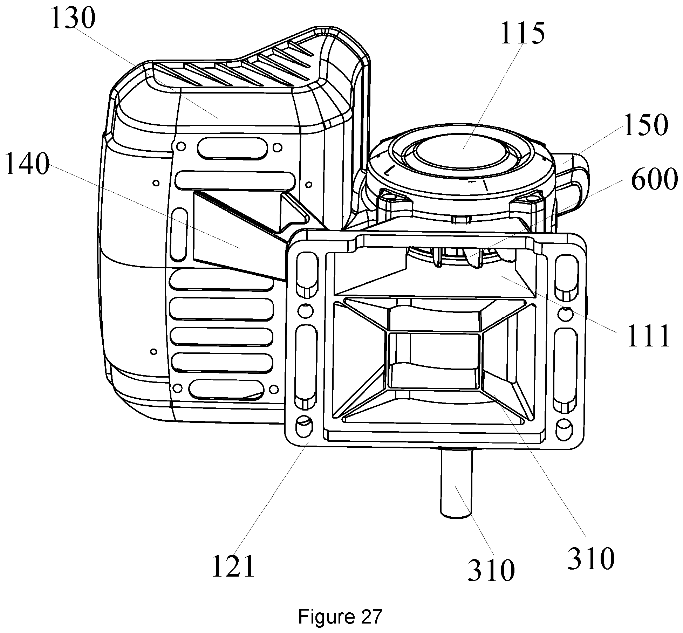

FIG. 27 is a second perspective view of a motor bracket according to at least one embodiment of the disclosure.

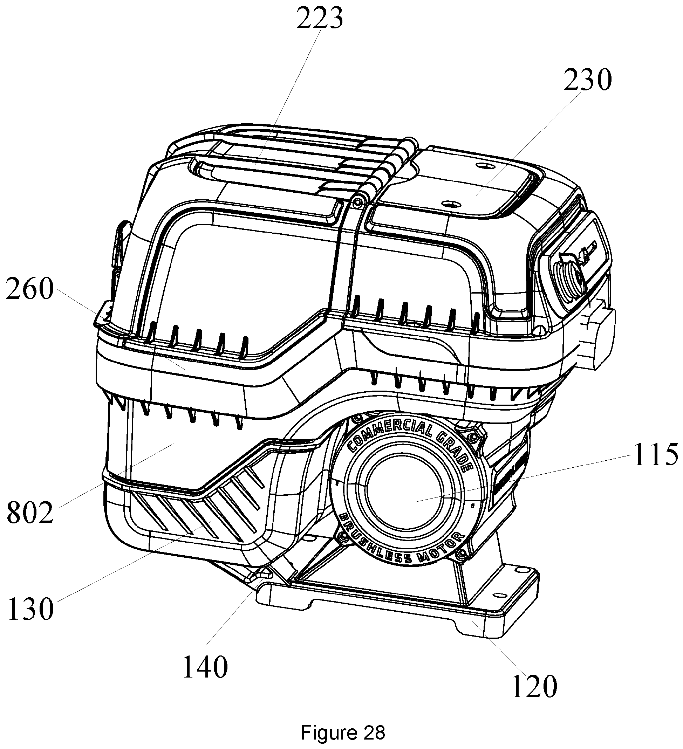

FIG. 28 is a second schematic structural view of a power head according to at least one embodiment of the disclosure.
FIG. 29 is a schematic view of a shock absorbing device according to an embodiment of the disclosure.

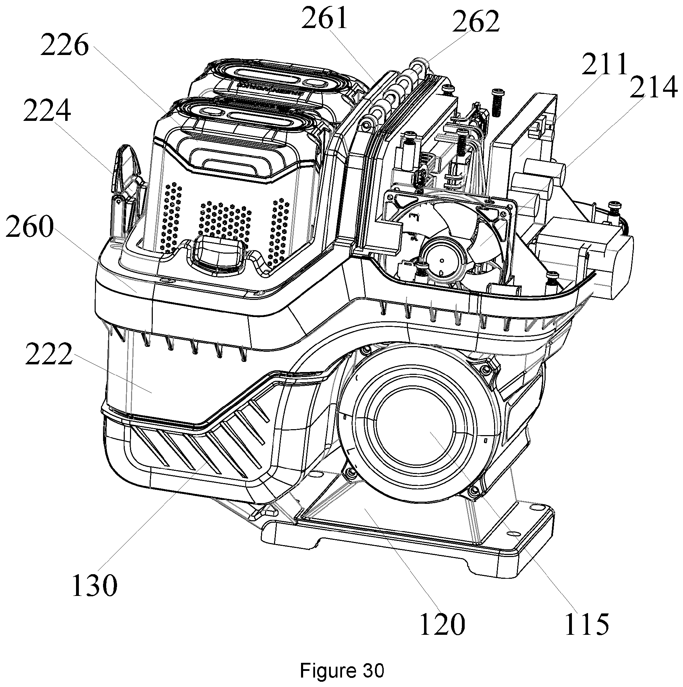

FIG. 30 is a partial schematic structural view of one embodiment of the disclosure.

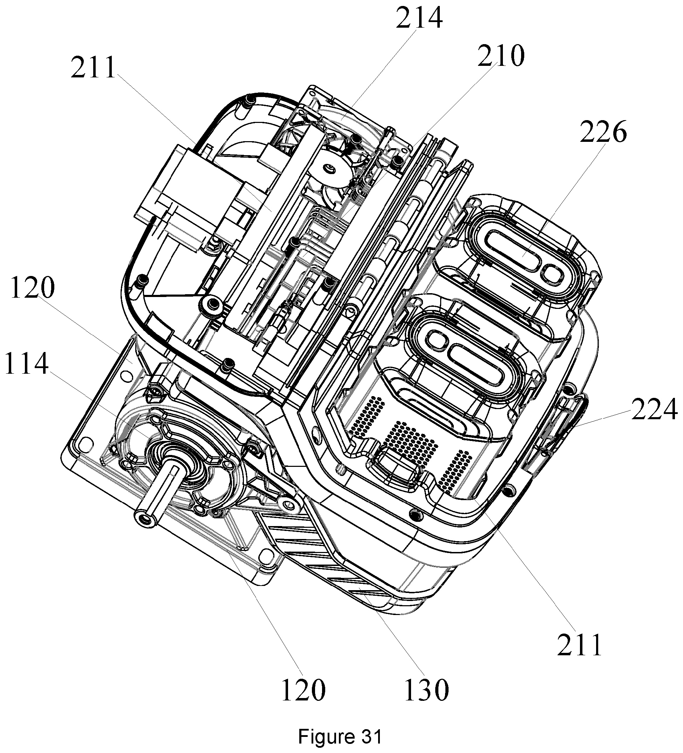

FIG. 31 is a partial structural perspective view of one embodiment of the disclosure.

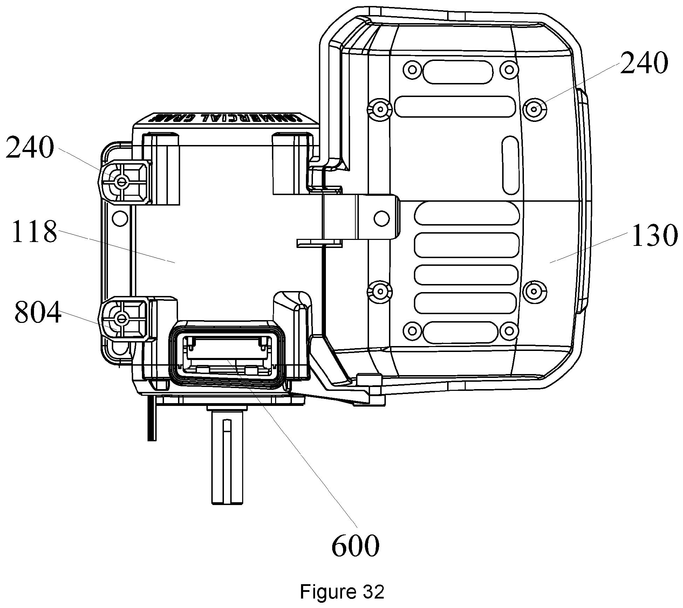

FIG. 32 is a top view of a motor assembly according to at least one embodiment of the disclosure.

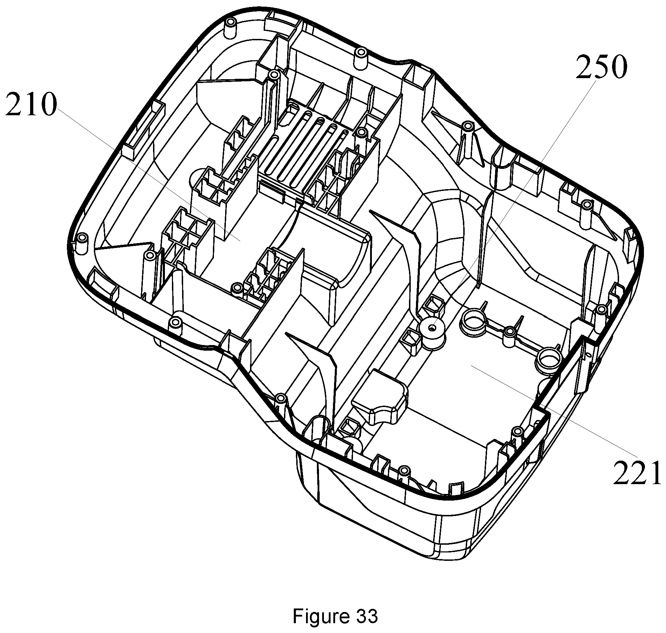

FIG. 33 is a partial schematic structural view of a housing according to at least one embodiment of the disclosure.

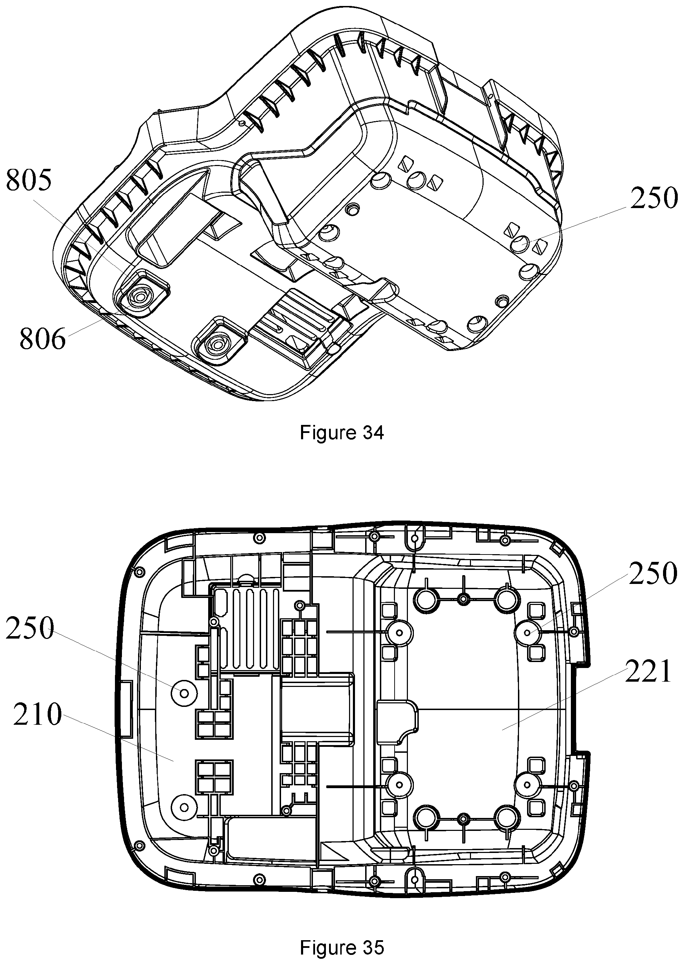

FIG. 34 is a partial perspective schematic structural view of a housing according to at least one embodiment of the disclosure.
FIG. 35 is a partial structural top view of a housing according to at least one embodiment of the disclosure.

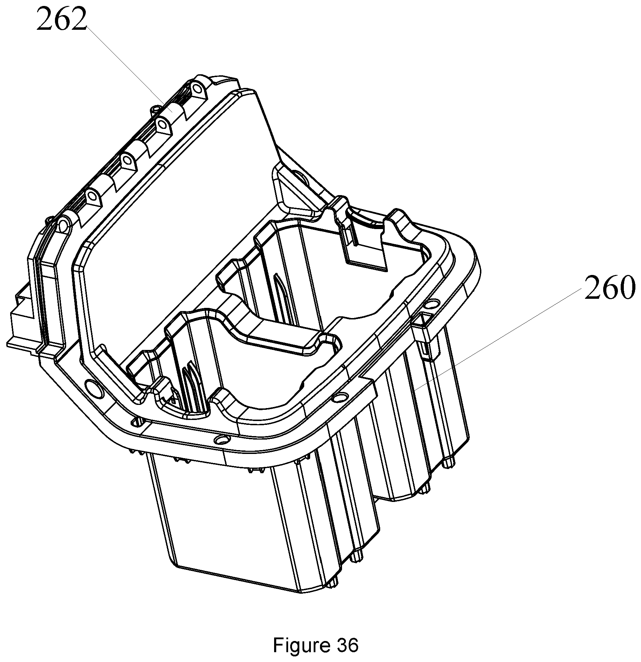

FIG. 36 is a schematic structural view of an arrangement of a battery according to at least one embodiment of the disclosure.

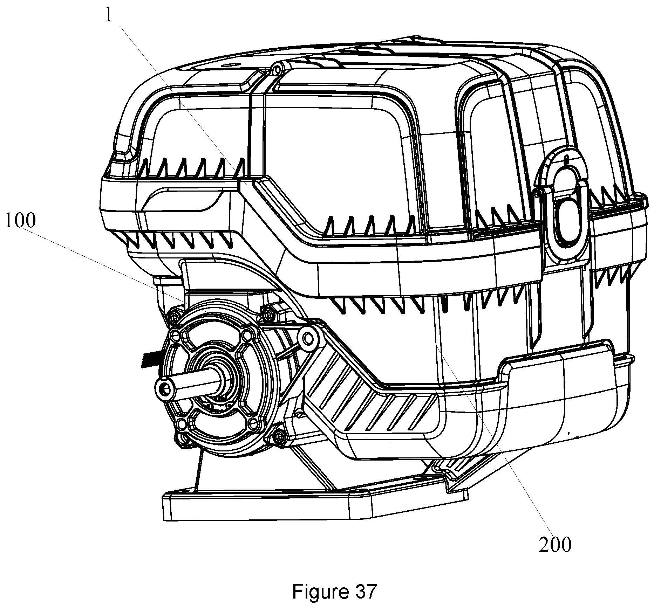

FIG. 37 is a third schematic structural view of a power head according to at least one embodiment of the disclosure.

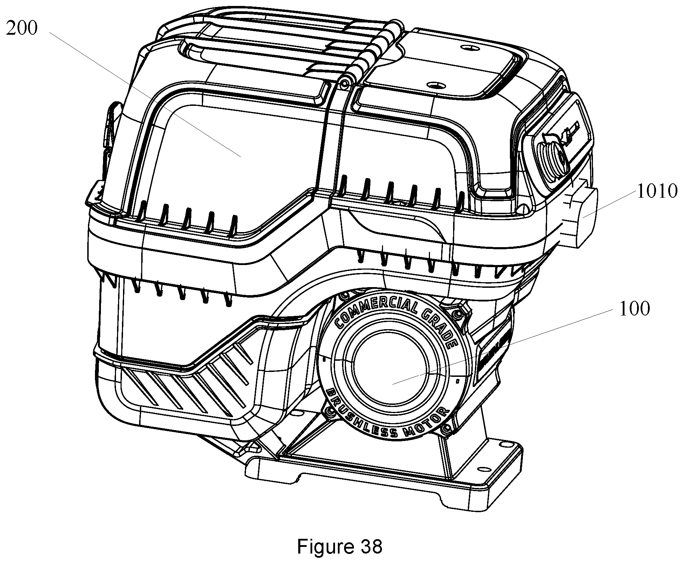

FIG. 38 is a third perspective schematic view of a power head according to at least one embodiment of the disclosure.
FIG. 39 is a second front view of a power head according to at least one embodiment of the disclosure.

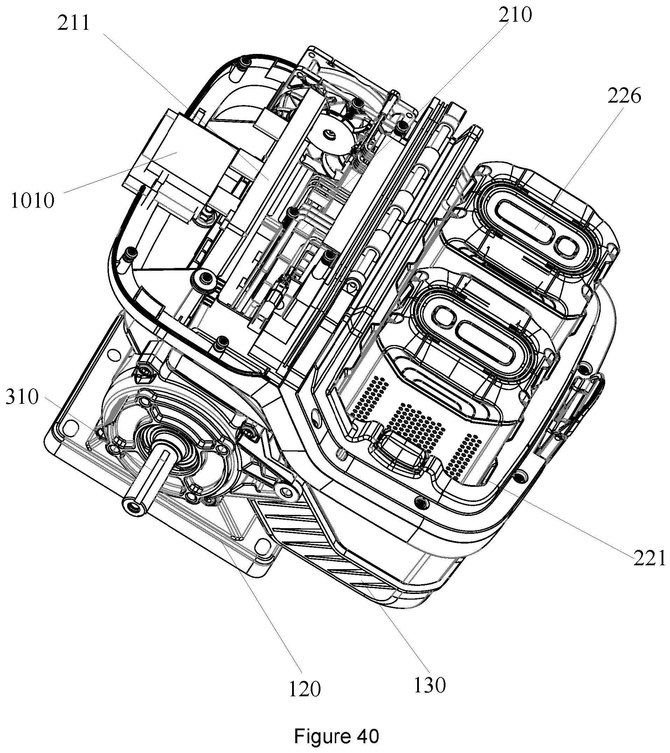

FIG. 40 is a third partial schematic structural view of a power head according to at least one embodiment of the disclosure.
FIG. 41 is a working principle block view of a battery assembly of the power head according to at least one embodiment of the disclosure.

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure. It should be noted that, the following embodiments and the features in the embodiments can be combined with each other without conflict. It should further be understood that the terms used in the examples of the disclosure are used to describe specific embodiments, instead of limiting the protection scope of the disclosure. The test methods that do not indicate specific conditions in the following embodiments are usually in accordance with conventional conditions, or conditions recommended by each manufacturer.

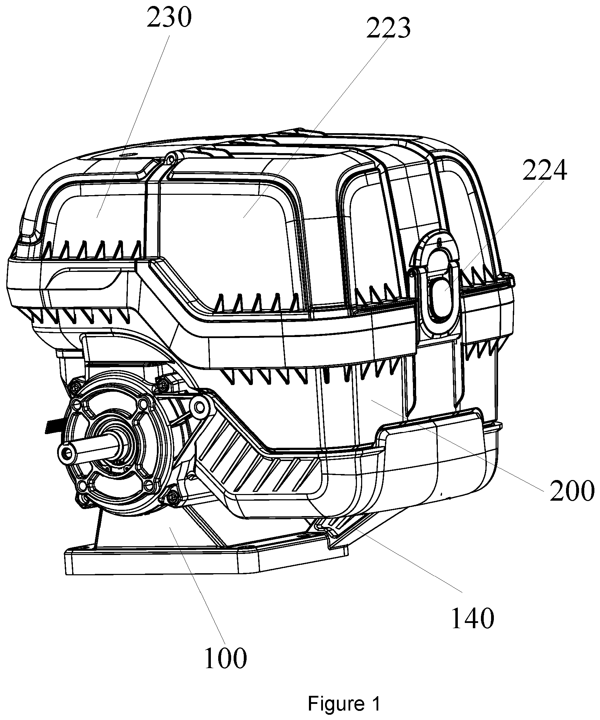

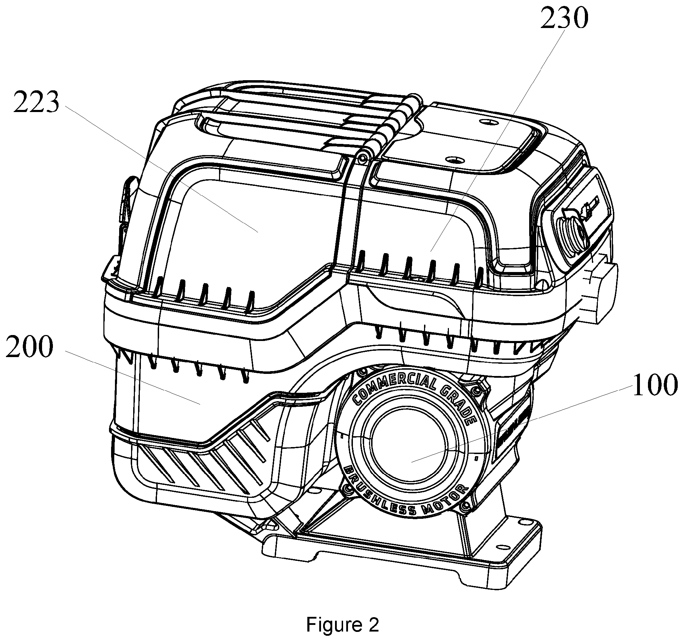

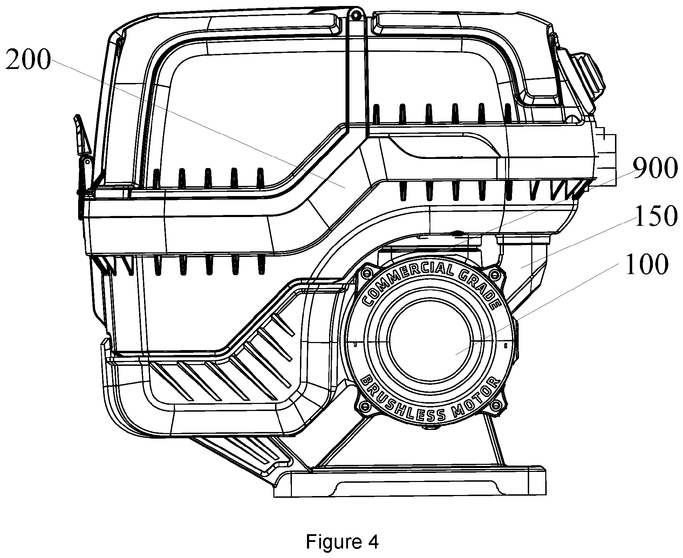

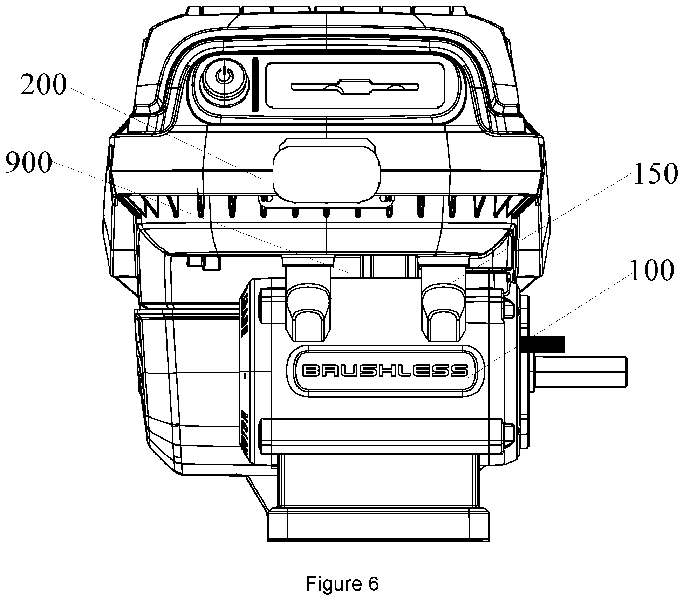

Please refer to FIG. 1 through FIG. 6. FIG. 1 through FIG. 6 show an embodiment of a structure of a power head. In order to solve problems of large vibration, high noise and high pollution of conventional fuel engine tools. An installation structure of the power head and a whole tool of the disclosure are compatible with the installation structure of the fuel engine, and the power head may replace the fuel engine without replacing the whole tool. The power head of the disclosure can meet requirements of tools such as power, rotating speed, rotating direction, etc.

The power head includes a motor bracket 100 and a housing 200. A motor assembly cavity 110 is arranged in the motor bracket 100. Wherein, a motor rotor 300 and a motor stator 400 are assembled in the motor assembly cavity 110. An output shaft 310 partially extends out of the motor assembly cavity 110. A battery pack 226 is arranged in the housing 200 to provide energy for the power head.

The motor bracket 100 is an integrally formed aluminum alloy housing. The motor bracket 100 serves as both a bracket for the power head and an outer housing for the motor. It is an integrated bracket that can combine a connection between a whole machine and components into one. The motor bracket 100 is made of aluminum alloy, which is beneficial to a heat dissipation of the motor on one hand, and may ensure a stability and firmness of a supporting on the other hand, thereby increasing a duration life. The motor bracket 100 is formed in one piece, which reduces assembly operations such as bolts, improves assembly efficiency, ensures a stability of the structure of the power head, and reduces an occurrence of assembly looseness problems caused by a long-term vibration environment.

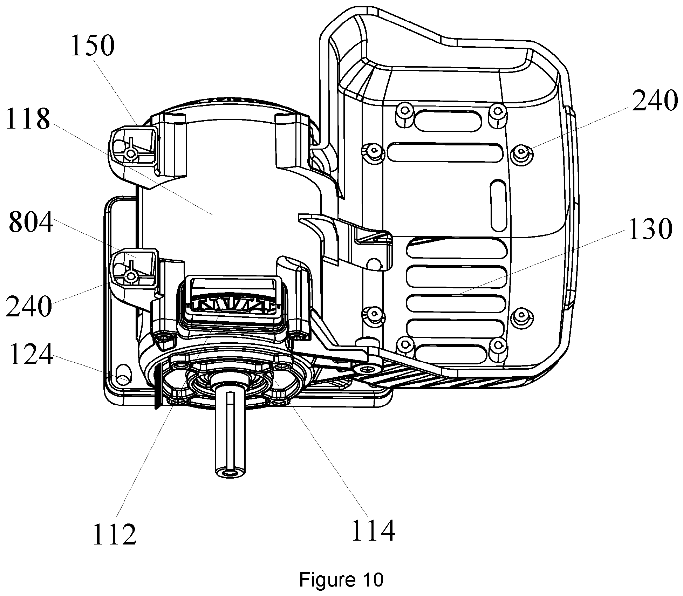

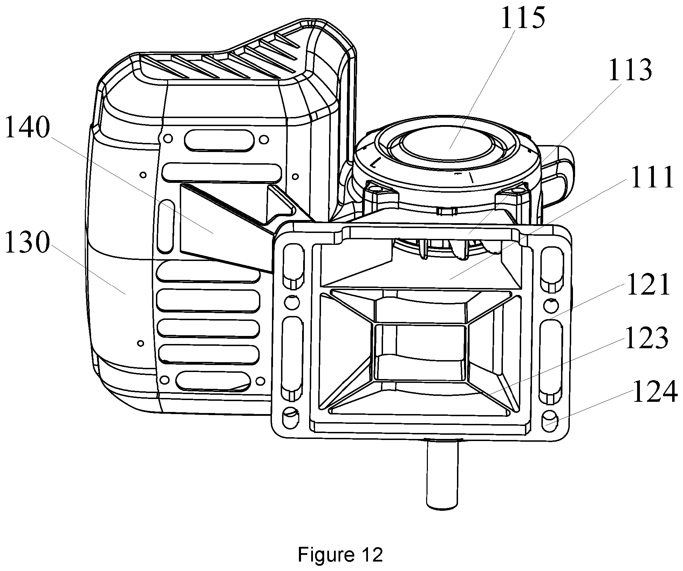

In an embodiment, please refer to FIG. 10 and FIG. 12. FIG. 10 and FIG. 12 show a schematic view of the motor bracket in an embodiment. The motor bracket 100 includes a motor assembly part 118, a whole machine installation part 120 and a battery supporting part 130.

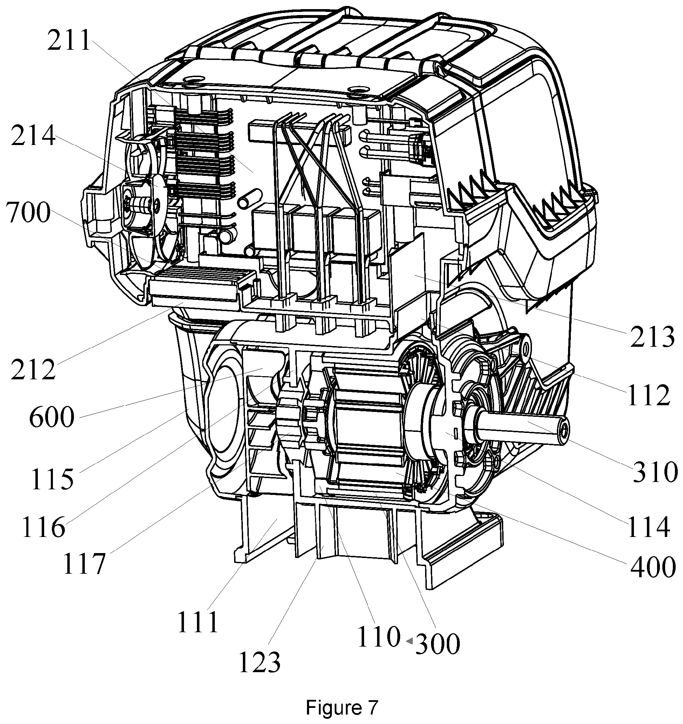

Please refer to FIG. 7. FIG. 7 shows a partial internal structure of the power head in an embodiment. A motor assembly cavity 110 is arranged in the motor assembly part 118. The motor assembly cavity 110 is assembled with components such as a motor rotor 300, the motor stator 400, and an output shaft 310 therein. In an exemplary embodiment of the disclosure, the motor is an external rotor motor, which means that the motor rotor 300 is located outside the motor stator 400 and rotates around the output shaft 310, which may meet a requirement of higher power. A rated power of the motor is from 2 kW to 4 kW, and a maximum output power range of the motor is from 3 kW to 5 kW. In an embodiment, the rated power of the motor is 2.9 kW, and the maximum output power of the motor is 3.6 kW. A rotating speed of the motor is from 2000 rpm to 4000 rpm. In an embodiment, the rotating speed may be adjustable, including 2800 rpm, 3200 rpm, and 3600 rpm.

Front end bolts of the motor assembly cavity 110 are fixed with a front end cover 114. A center hole penetrating the front end cover 114 is arranged at a center of the front end cover 114. A bearing is assembled in the center hole. The output shaft 310 is in interference fit with the bearing. The output shaft 310 penetrates the front end cover 114 and partially protrudes into the battery assembly cavity to facilitate a connection with a transmission mechanism. In one embodiment, the output shaft 310 has a same specification as the output shaft of a fuel engine and may be coupled with gears, belts, etc. for transmission. In an exemplary embodiment, a distance from the output shaft 310 to a bottom surface is from 90 mm to 120 mm, and a diameter of the output shaft 310 is from 18 mm to 22 mm, which is convenient for a direct replacement with conventional fuel engines.

The front end cover 112 is provided with installation holes, and there are four installation holes in total. Wherein, the four installation holes are arranged in a square arrangement around the output shaft 310. The front end cover 112 is installed on the motor bracket 100 through the installation holes to improve an installation firmness. In an exemplary embodiment of the disclosure, a projection distance between a center of the installation hole and an axis of the output shaft 310 is from 40 mm to 50 mm, which is adjusted according to actual needs.

A rear end plate 116 is arranged in the motor assembly cavity, and a center hole is also arranged at a center of the rear end plate 116. A bearing is arranged in a center hole of the rear end plate 116. A bearing cooperates with the output shaft 310, and the output shaft 310 is supported by the two bearings. In an embodiment of the disclosure, the rear end plate 116 is provided with a plurality of rear ventilation holes 117, the plurality of the rear ventilation holes is arranged in a circular array around the axis of the output shaft 310, so as to facilitate air circulation and heat dissipation in the motor assembly cavity 110 and avoid a damage to the motor caused by heat accumulation.

A rear sealing cover 115 is fixed to a tail part of the motor assembly cavity 110, and a fan cavity is formed between the rear sealing cover 115 and the rear end plate 116. A first fan 600 is installed in the fan cavity, and the first fan 600 is fixed to the output shaft 310. When the output shaft 310 rotates, it drives the first fan 600 to rotate synchronously, so as to actively dissipate heat for the motor assembly cavity 110, and a synchronous rotation ensures a stable heat dissipation. In an embodiment, one end of the first fan 600 close to the rear sealing cover 115 is a circular plate, the circular plate is matched with blades of the first fan 600 to change an airflow direction so that the airflow is discharged downward through a first external opening 111 along a preset direction. Conventional motor heat dissipation is generally performed by blowing air into the motor. The first fan 600 of the disclosure is close to the first external opening 111, and a heat dissipation method is to blow air outside the motor assembly cavity 110 to drive the airflow in the motor assembly cavity 110. A speed of the airflow is faster and a heat dissipation is more efficient.

The motor assembly cavity 110 is provided with a first internal opening 112 and the first external opening 111 at two ends thereof, respectively. The first internal opening 112 and the first external opening 111 are arranged at both ends of the motor assembly cavity 110 to ensure that cold air flows through the entire motor assembly cavity 110 for effective heat dissipation.

In an embodiment of the disclosure, the first external opening 111 is arranged at a bottom of the motor assembly cavity 110, directly below the first fan 600. The first fan 600 discharges the airflow in the motor assembly cavity 110 through the downward first external opening 111. Compared with an air outlet directly arranged at an end parallel to the output shaft 310, the downward first external opening 111 may reduce a damage of rainwater, dust, etc. from entering the motor assembly cavity 110 through the first external opening 111 to the motor. The first external opening 111 passes through the whole machine installation part 120 downwards. A ventilation groove 113 is arranged at a bottom of the side wall of the whole machine installation part 120. The ventilation groove 113 is communicated with the first external opening 111 to ensure a smooth air discharge from the first external opening 111 and a heat dissipation effect.

In an embodiment, the first internal opening 112 is arranged at a top of the motor assembly cavity 110 to ensure that cold air flows through the entire motor assembly cavity 110. The motor bracket 100 is integrally formed. If the first internal opening 112 is directly processed by a machining center, it is difficult to ensure processing and accuracy. The first internal opening 112 is divided into two parts, one part is arranged at an end part of the motor assembly cavity 110, and the other part is arranged on the front end cover 114. After the front end cover 114 is assembled on the motor assembly cavity 110, the two parts constitute a complete first internal opening 112. Openings of the two parts are both open-type, and processing difficulty is lower.

The whole machine installation part 120 is arranged at a bottom of the motor assembly part 118, and the power head is installed on a tool main body through the whole machine installation part 120. In an embodiment of the disclosure, a bottom surface of the whole machine installation part 120 is a rectangular machine installation surface 121, which is used to install and fix the power head on the tool main body. A size of the machine installation surface 121 is the same as that of the conventional gasoline engine to facilitate a replacement. A plurality of second through holes 124 is arranged on the machine installation surface 121, and the second through holes 124 may allow bolts to pass through. The whole machine installation part 120 is installed on the tool main body through the second through holes 124 and the bolts. An installation is simple and operations are quick. The second through holes 124 of the disclosure are matched with the conventional tool main body, which is convenient for replacing only the fuel engine without replacing the entire power tool. In some embodiments, the second through hole 124 is a slotted hole arranged on the machine installation surface 121, and there are four second through holes. Two of the second through holes are slotted holes and the other two are circular holes. Radius of the slotted hole is from 4 mm to 6 mm, and a distance between centers of two semicircles is from 14 mm to 16 mm. The radius of the circular hole is from 4 mm to 6 mm. The machine installation surface is adjusted according to an installation size of the conventional fuel engine to facilitate the replacement. The output shaft of the motor, which means the axis of the output shaft 310, is parallel to the machine installation surface 121. In an embodiment, after the machine installation surface 121 is installed on the tool main body, the machine installation surface 121 is parallel to the ground. In another embodiment, after the machine installation surface 121 is installed on the tool main body, the machine installation surface 121 is perpendicular to the ground, and at this time the axis of the output shaft 310 is also perpendicular to the ground. It should be noted that, an angle of the output shaft 310 is determined by a coupled position between the machine installation surface 121 and the tool main body. In addition to being parallel or perpendicular to the ground, the axis of the output shaft 310 may also have other angles.

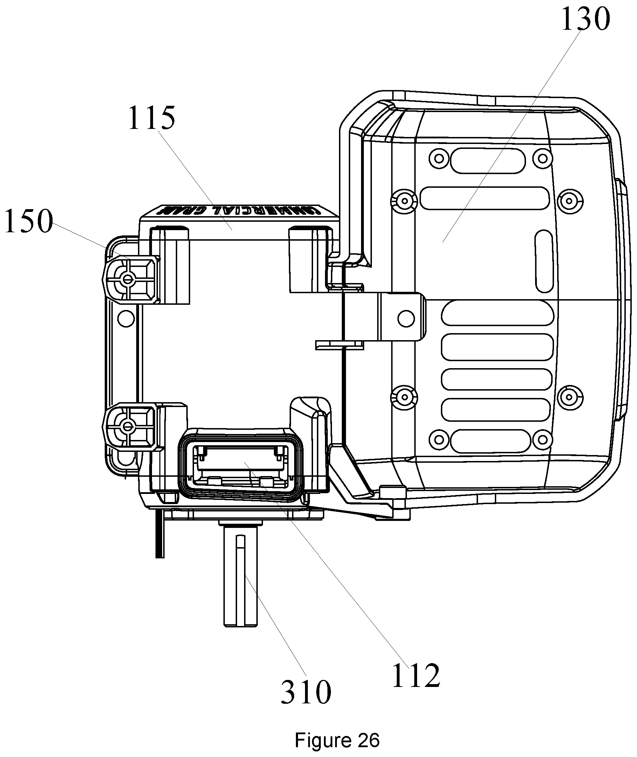

Please refer to FIG. 26. In an embodiment, the machine installation surface 121 is substantially parallel to the output shaft of the motor rotor, in some embodiments parallel. The first external opening 111 penetrates downward from the motor assembly cavity 110 through the whole machine installation part 120. The ventilation groove 113 is arranged at a bottom of a side surface of the whole machine installation part 120. The first external opening 111 is communicated with the ventilation groove 113. In an embodiment, a vertical hollow part is arranged in the whole machine installation part 120, and the hollow part passes through the whole machine installation part 120 downward. In some embodiments, reinforcing ribs 123 are formed between the several hollow parts, and the reinforcing ribs 123 form a frame with a cross-section of a rectangle, square, triangle or rhombus. A periphery of an area enclosed by the reinforcing ribs 123 is connected to an inner wall of the whole machine installation part 120 through other reinforcing ribs 123, thereby ensuring an integrity of the reinforcing ribs 123 and improving a strength of the whole machine installation part 120, which ensures that the whole machine installation part 120 may provide a stable support for the power head and facilitates the heat dissipation of the motor assembly cavity 110 through the lower wall. A hollowing process may reduce weight, save materials and save costs while ensuring a bearing strength. In an embodiment, the ventilation groove 113 is arranged lower than the reinforcing rib 123, which means that the hollow part is communicated with external air. When the airflow of the first external opening 111 flows outward through the ventilation groove 113, a Venturi effect occurs at a bottom of a first ventilation opening, thereby driving the air in the hollow part to flow, and heat at a lower wall of a motor installation cavity flows out of the ventilation groove 113 together with the airflow of the first external opening 111 in a form of thermal convection, thereby realizing the heat dissipation of the lower wall of the motor installation cavity and ensuring the heat dissipation of the assembled assemblies in the motor installation cavity.

A control wire is arranged between the power head and the whole machine (for example, an air compressor, a cleaning machine, a snow blower, or other power tools driven by the power head). The control wire is used to receive working states of the whole machine, such as whether an air pressure of the air compressor reaches a threshold, a water pressure of the cleaning machine reaches the threshold, etc. If the threshold is reached, a signal is sent to the power head, the power head automatically stops and is in a standby state. When the pressure drops to a set value, a signal is sent to the power head to restart the power head.

The battery supporting part 130 is arranged on a side surface of the motor assembly part 118. The battery supporting part 130 is mainly used to support the battery pack 226. The battery pack 226 is relatively high. The battery supporting part 130 is arranged on the side surface of the motor assembly part 118. After the power head is assembled, an overall shape is roughly rectangular.

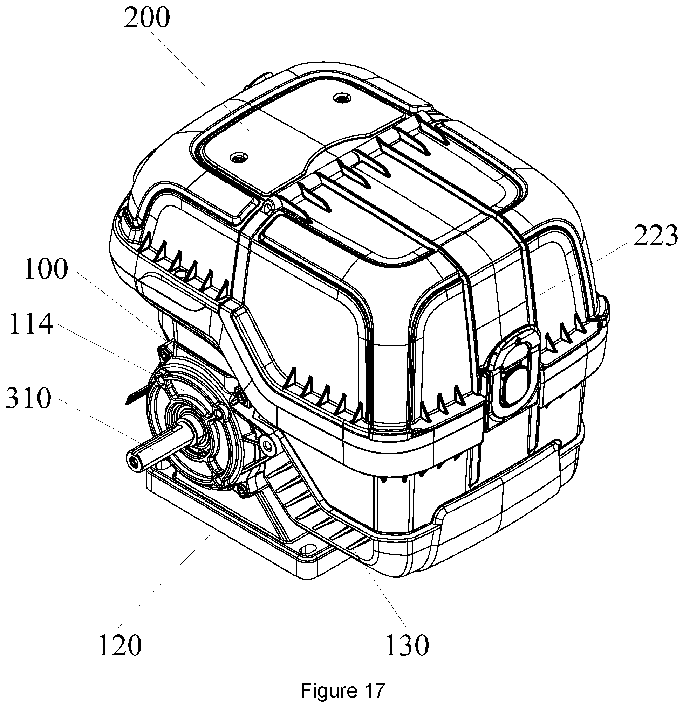

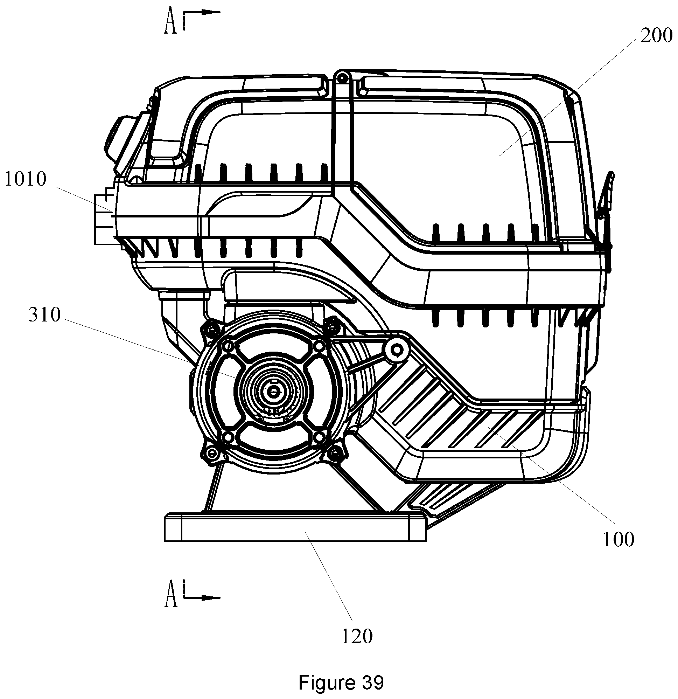

Please refer to FIG. 10, FIG. 17 and FIG. 39. In an embodiment, a side surface of the motor bracket 100 is a battery supporting part 130, which is in a "Z" shape with a main body of the motor bracket 100. The battery supporting part 130 is provided with an installation cavity with an opening vertically upward, and the installation cavity is fixedly connected with a battery connecting part 220 of the housing 200. In some embodiments, a gap is arranged between the battery connecting part 220 and the main body of the motor bracket 100, which means that a gap is arranged between the battery connecting part 220 and the side surface of the motor bracket 100, which facilitates an air circulation and is beneficial to the heat dissipation of a side wall of the motor bracket 100.

In order to further improve a heat dissipation capacity of the motor assembly cavity 110, in one embodiment, the battery supporting part 130 and an outer side wall of the motor assembly cavity 110 are fixed with multiple points at intervals, and the battery supporting part 130 and the outer side wall of the motor assembly cavity 110 are connected through two or more points at a certain interval. Through reducing a contact area between the outer side wall of the motor assembly cavity 110 and other components, air on an outer side wall of the motor assembly cavity 110 may flow and cool a cavity wall of the motor assembly cavity 110 through heat convection, thereby improving a heat dissipation effect of the motor assembly cavity 110 on the components assembled therein.

The battery supporting part 130 is integrally formed with the side wall of the motor assembly cavity 110. The battery supporting part 130 is located on the side surface of the motor assembly part 118, resulting in the bottom being in a suspended state. In order to ensure a load-bearing capacity of the battery supporting part 130 and avoid the battery supporting part 130 being subjected to large forces and being damaged or separated from the motor assembly part 118 in an event of an impact, in one embodiment, a reinforcing supporting part 140 is arranged on the whole machine installation part 120. A bottom of the reinforcing supporting part 140 is in contact with the whole machine installation part 120, and a top of the reinforcing supporting part 140 is supported on a bottom surface of the battery supporting part 130. The reinforcing supporting part 140 is inclined to effectively support the battery supporting part 130 and ensure a stable support for the battery pack 226 under complex working conditions such as vibration.

In an embodiment, the bottom surface of the battery supporting part 130 is provided with an enclosing block, and the block is respectively arranged on three sides of the bottom surface of the battery supporting part 130 that are not close to the motor assembly part 118. Through arranging the block 131, an area where the battery pack 226 is located is further supported to prevent the battery pack 226 from tipping over under the vibration or impact. The housing 200 is provided with a concave part adapted to the block, and the concave part is concave into the housing 200. A step is formed at a position where the concave part contacts a top surface of the block. The step is in contact with a plane of the top surface of the enclosure, so that the housing 200 may be further supported to prevent the housing 200 from shaking or tipping over.

In order to further reduce a weight of the power head, in one embodiment, a plurality of weight-reducing holes is arranged on the bottom surface of the battery supporting part 130 to achieve a weight-reducing design. While ensuring a strength of the battery supporting part 130, the battery supporting part 130 is reduced in weight. The weight-reducing holes are further beneficial to the heat dissipation at the bottom of the battery. In an embodiment, the weight-reducing hole at the bottom of the battery supporting part 130 is a long hole, which facilitates heat dissipation of the battery pack 226 through the battery connecting part 220 while ensuring a load strength of the battery supporting part 130.

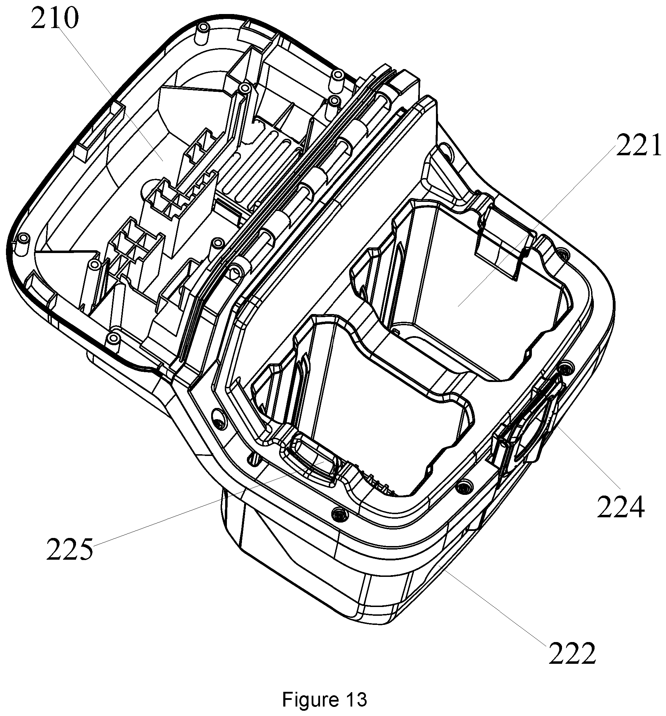

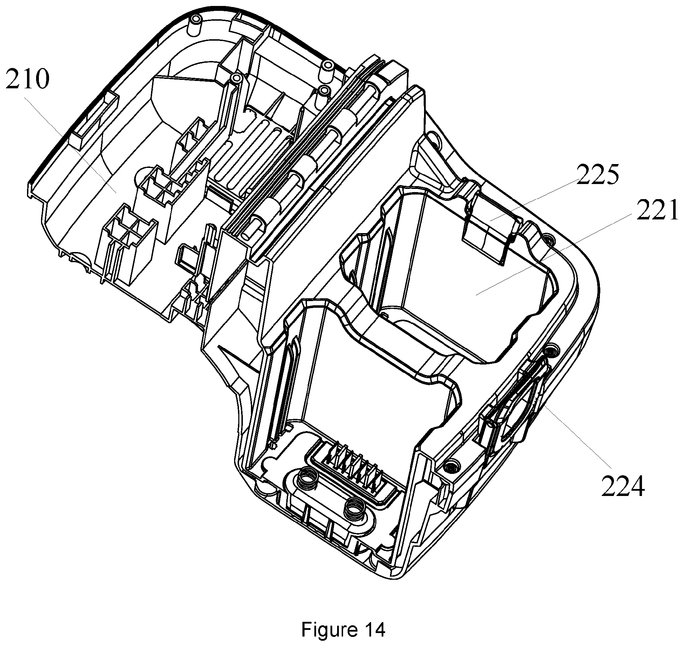

The power head further includes the housing 200, and the housing 200 is fixed on an upper part of the motor bracket 100. Please refer to FIG. 13 and FIG. 14. The housing 200 is provided with a first accommodating cavity 210 and a second accommodating cavity 221. The first accommodating cavity 210 is equipped with a control assembly 211 such as a control board. The control assembly 211 is connected with a switch circuit installed on a bottom housing. The battery pack 226 is detachably installed in the second accommodating cavity 221. The battery pack 226 is electrically connected with the control assembly 211 and the motor to provide energy for the motor to rotate.

The shell 200 is a plastic housing 200 in some embodiments. On one hand, the plastic housing 200 may reduce the weight of the power head and facilitate the operation. On the other hand, it may provide buffering for the components assembled in the housing 200 to prevent the components assembled in the housing 200 from being damaged when it falls or receives a large impact.

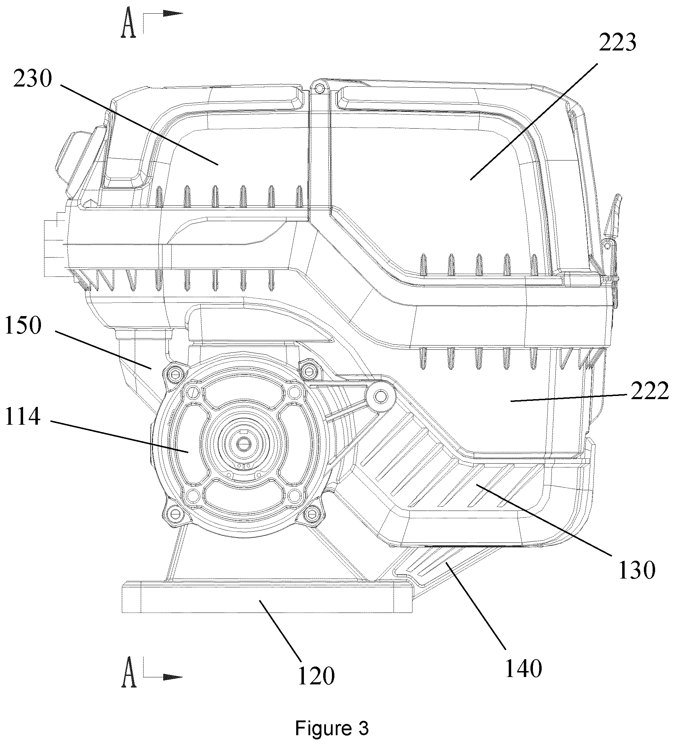

Please refer to FIG. 3, FIG. 4 and FIG. 6. The housing 200 is fixedly connected with the motor bracket 100. In an embodiment of the disclosure, a gap 900 is arranged between the motor assembly part 118 and the housing 200. The motor assembly part 118 is provided with an installation block 150, and the installation block 150 is fixedly connected with the bottom surface of the housing 200. The first accommodating cavity 210 is connected with the motor assembly cavity 110 through a second internal opening 213 arranged in the housing and the first internal opening 112 arranged in the motor bracket 100. The housing 200 and the motor assembly part 118 are not in contact at other positions except for the installation block 150 and the internal openings. The motor assembly part 118 and the assemblies assembled in the motor assembly part 118 constitute an external motor, which may effectively ensure that the assemblies assembled in the motor assembly cavity 110 may dissipate heat through the side wall of the motor assembly part 118, thereby improving the heat dissipation capacity, avoiding a heat accumulation, and increasing a duration life of the power head.

The housing 200 is provided with an operation panel, and the operation panel is provided with a power switch, which may control an on and off of the power head. On one side of the power switch, there is a speed selection switch. The speed selection switch is a membrane switch with three rotating speeds: low, medium and high. An operator presses the speed selection switch in sequence to switch between the three gears: low, medium and high. The operation panel is further provided with a display device for displaying power of the battery pack, which can display remaining power of the battery pack in real time.

In an embodiment, the first accommodating cavity 210 is arranged above the motor assembly part 118, and the second accommodating cavity 221 is arranged on a top of the battery supporting part 130. On one hand, a height of the battery pack 226 is relatively large. Through arranging the first accommodating cavity 210 above the motor assembly part 118, an overall layout of the power head is more reasonable. On the other hand, the motor assembly part 118 is equipped with the motor rotor 300, the motor stator 400, etc., which are relatively heavy. A side of the battery pack 226 in the housing 200 is even heavier. Through arranging the battery pack 226 and the motor assembly part 118 nearly horizontally, a weight distribution of the power head is more even, and an operation is more convenient.

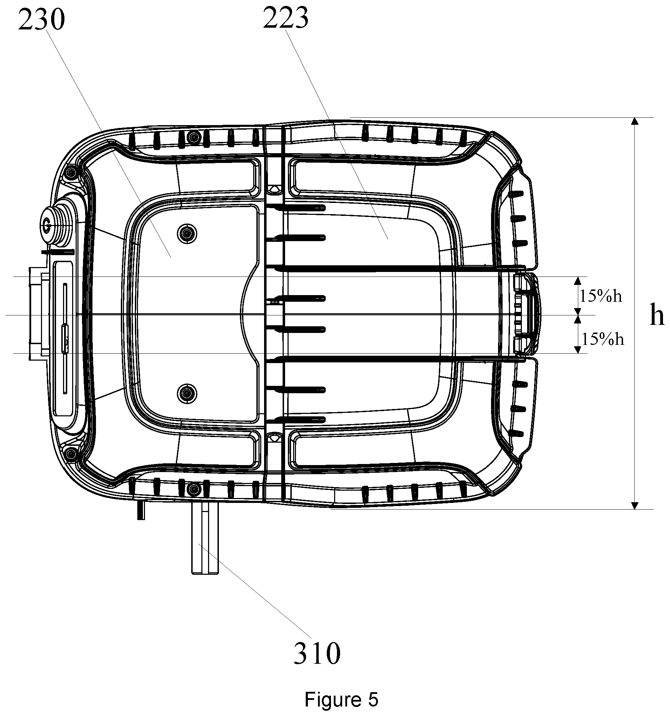

Please refer to FIG. 5. In an embodiment, a center of gravity projection of the power head is located between left and right offset surfaces of a center plane of the power head, and a distance between the left and right offset surfaces and the center plane is no more than 15 percent of a width of the power head. When the power tool is working, the center of gravity projection of the power head is located between the left and right offset surfaces, which makes it easier for the user to operate. In some embodiments, the center of gravity projection of the power head is located on the center plane of the power head, and the center plane is a center plane of the power head perpendicular to the output shaft 310.

In order to further improve a convenience of the operation and a stability of the tool, the center of gravity is located between the motor assembly cavity 110 and the housing in a longitudinal direction. In some embodiments, the center of gravity is located above the motor assembly part and below the housing where the first accommodating cavity is located. In left and right directions, the center of gravity of the power head is located between the motor assembly part and the battery pack. The center of gravity of the power head is limited in three directions to facilitate the operation of the tool.

The housing 200 includes a housing body 222, a top cover 230, and a flip cover 223. In order to reduce the weight of the whole machine and reduce costs, the housing 200 is made of plastic in some embodiments, which is convenient for processing and low in cost. It may also provide buffering for the components assembled in the housing 200 during vibration or impact to avoid damage to the components. Please refer to FIG. 13 through FIG. 14. In an embodiment, the housing body 222 is provided with two vertically open cavities. The top cover 230 is fixedly connected with the housing body 222 by screws or bolts to form the first accommodating cavity 210.

For electronic components such as control boards, a large amount of heat will be generated during the operation. If the heat cannot be dissipated in time, the electronic components will be damaged by overheating or the control operation will be affected. In order to improve the heat dissipation capacity of the first accommodating cavity 210 where the control assembly 211 is located, in one embodiment, a second external opening 212 and a second internal opening 213 are arranged at a bottom of the first accommodating cavity 210, and the second external opening 212 and the second internal opening 213 are respectively arranged on two sides of the bottom of the first accommodating cavity 210, which means that the second external opening 212 and the second internal opening 213 are arranged on two sides of the control assembly 211, and an airflow direction between the second external opening 212 and the second internal opening 213 is parallel or substantially parallel to components such as the control board, thereby ensuring that the cold air entering from the second external opening 212 flows through the control assembly 211 and then flows out of the first accommodating cavity 210 from the second internal opening 213, and improving the heat dissipation capacity of the first accommodating cavity 210.

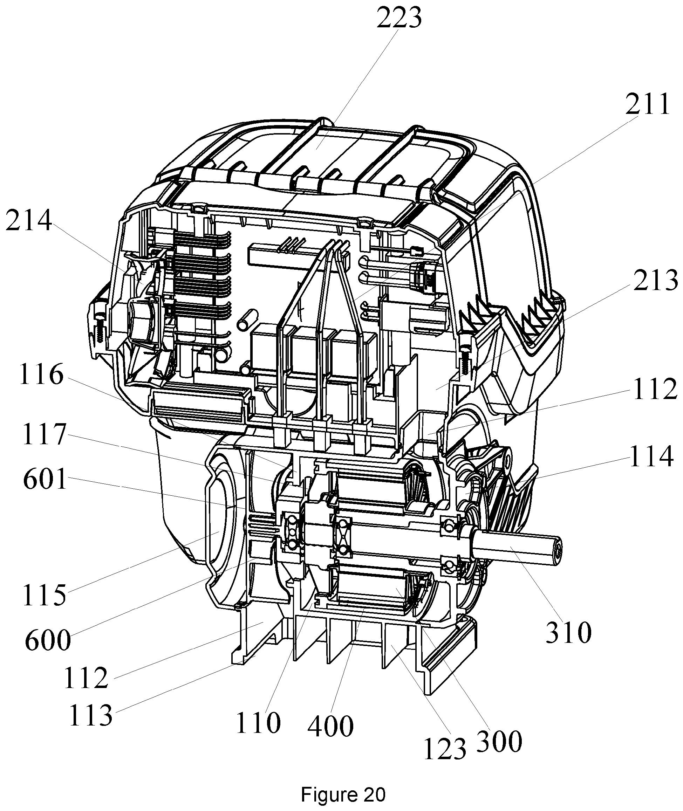

In order to improve the overall heat dissipation capability of the power head, heat dissipation of the control assembly 211, and the motor and other components is controlled in a coordinated manner. In an embodiment of the disclosure, the power head includes a heat dissipation passage. Please refer to FIG. 20 through FIG. 21. Two ends of the heat dissipation passage 500 are respectively the first external opening 111 arranged at the bottom of the motor assembly cavity 110 and the second external opening 212 arranged at a bottom of the housing 200. In an embodiment of the disclosure, the first external opening 111 is arranged at the bottom of the motor assembly cavity 110 away from the front end cover 114. One side of the front end cover 114 needs to be connected with a transmission assembly, and a space arrangement is more compact. A side away from the front end cover 114 is provided with fewer elements and has a larger heat dissipation space, which is conducive to improving the heat dissipation capacity. The first external opening 111 passes through the motor bracket 100 downwards. The ventilation groove 113 is arranged at a bottom of the side wall of the motor bracket 100. The first external opening 111 is communicated with lateral air through the ventilation groove 113. A ventilation direction is parallel or substantially parallel to the output shaft 310.

The second external opening 212 is arranged at the bottom of the housing 200, and a gap is arranged at a connection between the housing 200 and the motor bracket 100 at the first accommodating cavity 210 to facilitate the air to flow at the second external opening 212.

The first external opening 111 is communicated with the lateral air through the ventilation groove 113. Compared with a conventional lateral ventilation directly from a motor end, on one hand, a distance between the ventilation groove 113 and the second external opening 212 may be increased to prevent hot air from being re-sucked into the power head, and on the other hand, the first external opening 111 penetrates the motor bracket 100 downward and is communicated with the air through the lateral ventilation groove 113. The second external opening 212 is arranged at the bottom of the housing 200, which may also prevent rainwater from entering the first accommodating cavity 210 through the second external opening 212, thereby improving waterproof ability.

The heat dissipation passage 500 further includes the first internal opening 112 arranged at the top of the motor assembly cavity 110 and the second internal opening 213 arranged at the bottom of the housing 200. The first internal opening 112 is in contact with and communicates with the second internal opening 213. The motor assembly cavity 110 and the first accommodating cavity 210 are communicated through the first internal opening 112 and the second internal opening 213, which is beneficial for a concentrated heat dissipation of the power head and better ensures heat dissipation efficiency.

In an embodiment of the disclosure, the first internal opening 112 is arranged at a top of a side away from the first external opening 111, thereby ensuring that the airflow in the heat dissipation passage 500 may penetrate the entire first accommodating cavity 210. The air flows through coil windings, thereby improving the heat dissipation effect.

In an embodiment of the disclosure, the second internal opening 213 is arranged at the bottom of the housing 200 away from the second external opening 212, so as to ensure that the air in the heat dissipation passage 500 flows through the first accommodating cavity 210, thereby sufficiently dissipating the heat of the components of the control module 211.

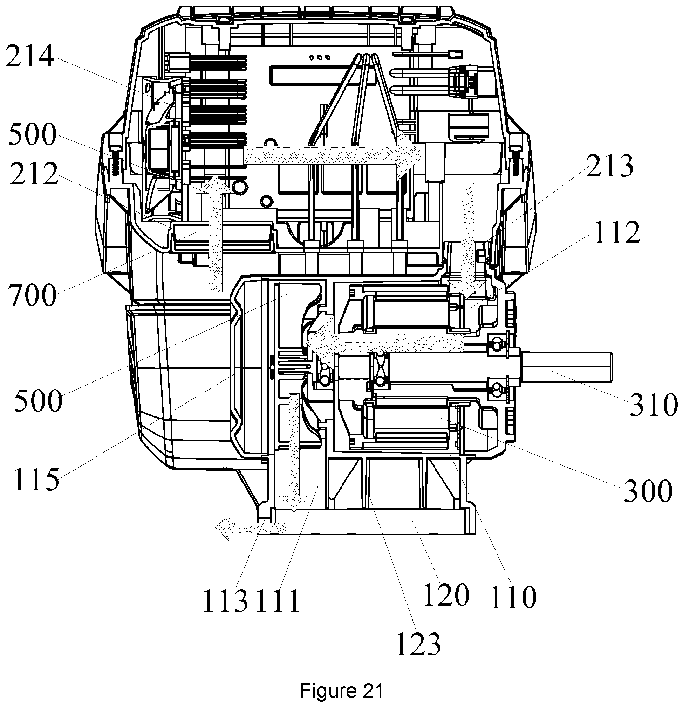

A first fan 600 is arranged in the heat dissipation passage 500, and the first fan 600 drives the air to flow, thereby increasing a speed of the airflow in the heat dissipation passage 500 and improving the heat dissipation efficiency. Please refer to FIG. 20 and FIG. 21. In an embodiment of the disclosure, the first fan 600 is arranged on the output shaft 310, specifically, on a side of the output shaft 310 away from the front end cover 114 and on a top of the first external opening 111. The first fan 600 is a centrifugal fan in some embodiments. The first fan 600 is arranged on the output shaft 310. When the motor rotates, the first fan 600 rotates synchronously, thereby ensuring a stability of heat dissipation. When the motor stops rotating, the first fan 600 stops rotating immediately, which may save energy, reduce consumption and avoid ineffective rotation of the first fan 600. During operation, the first fan 600 rotates to drive the air to be discharged outward from the first external opening 111, thereby driving outside air to flow from the second external opening 212 into the first accommodating cavity 210, then flow into the motor assembly cavity 110 through the second internal opening 213 and the first internal opening 112, and then be driven by the first fan 600 to be discharged to an outside after passing through the coil winding. An original heat dissipation method is usually to blow air to a part that needs the heat dissipation, thereby driving the airflow to flow to an area to be cooled. The disclosure blows air to the outside through the first fan 600, so that the area to be cooled draws air from the outside, enables an airflow speed to be faster, and enables a flow direction and speed to be more stable, thereby ensuring a stable and continuous heat dissipation effect.

A fan blade blocking plate 601 is arranged on a rear side of the first fan 600. The fan blade blocking plate 601 may change the airflow direction to ensure that the airflow is changed from flowing transversely through the motor assembly cavity 110 to flowing longitudinally parallel to the first external opening 111, thereby preventing the airflow from continuing to flow toward a tail of the output shaft 310, so as to reduce an occurrence of eddy currents, ensure a stability of the airflow circulation in the heat dissipation passage 500, and ensure the stability of heat dissipation.

In another exemplary heat dissipation passage, the first fan 600 is arranged on the output shaft 310, specifically, at one end of the output shaft 310 close to the front end cover 114 and at a bottom of the first internal opening 112. The first fan 600 is an axial flow fan in some embodiments. During operation, the airflow may first flow into the motor assembly cavity 110 through the first external opening 111, then be driven by the first fan 600 to flow into the first accommodating cavity 210, and finally flow out through the second external opening 212. The outside air is sucked into a heat dissipation area to ensure the stable heat dissipation.

The control assembly 211, the battery pack 226, etc. will all generate heat. Cavity bodies of the first accommodating cavity 210 and the second accommodating cavity 221 are relatively large. In order to improve the heat dissipation capacity of the first accommodating cavity 210 and the second accommodating cavity 221, in one embodiment of the disclosure, a side wall of the first accommodating cavity 210 close to the second external opening 212 is equipped with a second fan 214. A blowing direction of the second fan 214 is perpendicular or inclined upward to the second external opening 212. The second fan 214 may accelerate a flowing speed of the airflow on one hand, and change a movement direction of the airflow on the other hand, so that the airflow may flow through a larger range to ensure the sufficient heat dissipation.

In an embodiment, a direction of the airflow driven by the second fan 214 is consistent with the direction of the airflow in the heat dissipation passage 500. That is, when air flows in from the second external opening 212, the second fan 214 blows air in a direction perpendicular to an air direction of the second external opening 212 toward the first accommodating cavity 210. When air flows out from the second external opening 212, the second fan 214 blows air in a direction parallel to the wind direction of the second external opening 212 toward the second external opening 212. The heat dissipation passage 500 is relatively long, and the second fan 214 may be arranged to increase the airflow speed and improve the heat dissipation effect.

The second internal opening 213 is communicated with the first internal opening 112, and the first fan 600 blows air toward the first external opening 111 and drives the cold air to enter the first accommodating cavity 210 through the second external opening 212. The cold air enters the motor assembly cavity 110 through the second internal opening 213 and the first internal opening 112, and finally flows out through the first external opening 111 and the ventilation groove 113, and the first fan 600 blows air outward to drive the airflow to dissipate heat.

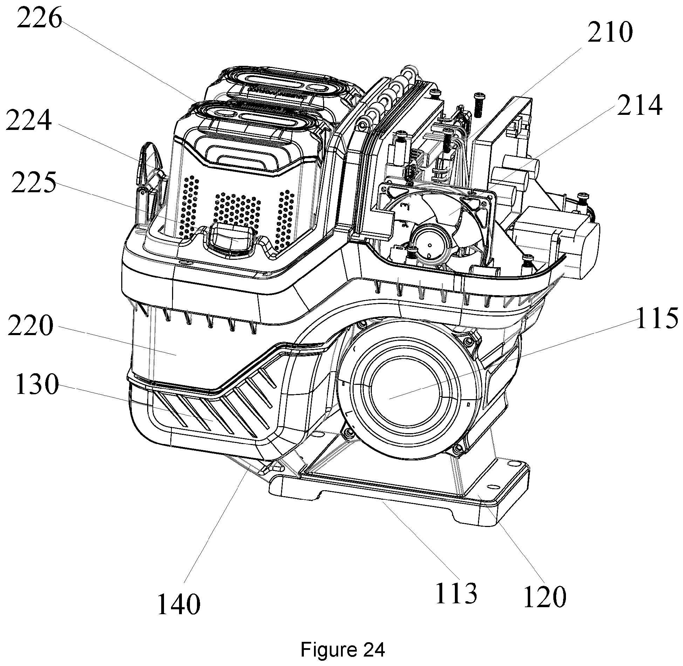

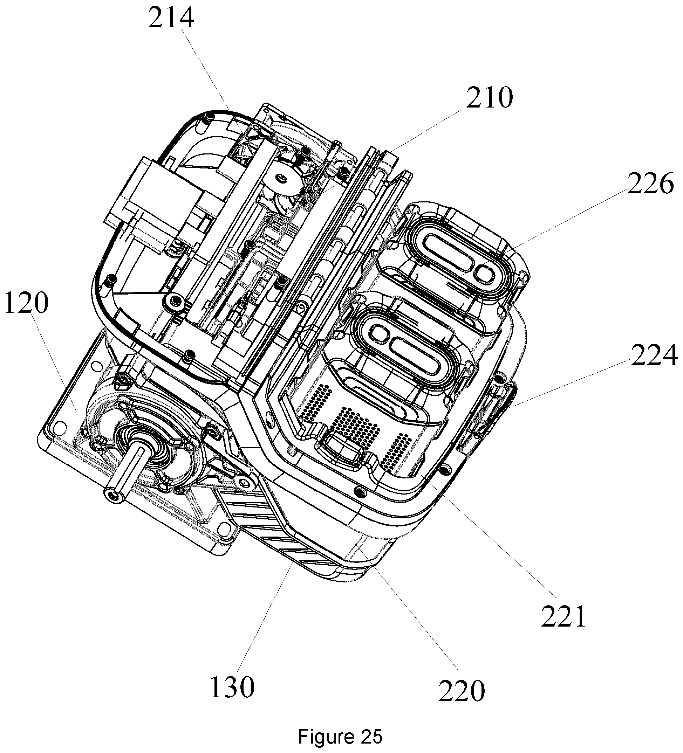

Please refer to FIG. 24 and FIG. 25. In an embodiment, the first accommodating cavity 210 is equipped with a control board and other electronic components, which are fixed in the first accommodating cavity 210 by screws. The control board and other electronic components are arranged parallel to a direction of the output shaft 310, forming a plurality of passages that transversely penetrate the first accommodating cavity 210, and the plurality of passages are parts of a heat dissipation air duct. The heat dissipation air duct divides the control module 211 transversely, so that the air flows through the control module 211, ensuring that the control board and other electronic components of the control module 211 can effectively dissipate heat and avoid a problem of local heat accumulation. The heat dissipation air duct runs transversely through the first accommodating cavity 210, and an airflow passage is unobstructed, which reduces excessive bends that lead to a decrease in the airflow speed, reduces the occurrence of eddy currents, increases the airflow speed, and improves the heat dissipation efficiency.

In an embodiment, a gap is arranged between the housing 200 at the bottom of the first accommodating cavity 210 and a top of the motor bracket 100. Two installation blocks 150 are arranged on a side surface of the top of the motor bracket 100, and the motor bracket 100 is fixedly connected with the housing 200 through the extended installation blocks 150, thereby ensuring that there is a gap between the top of the motor bracket 100 and the housing 200 at the bottom of the first accommodating cavity 210. The motor bracket 100 integrally formed of aluminum alloy has good thermal conductivity, and the side wall of the motor assembly cavity 110 may directly discharge heat. Through arranging a gap between the housing 200 and the top of the motor bracket 100, the plastic housing 200 is prevented from affecting the heat dissipation of the motor bracket 100, and the heat dissipated by the motor bracket 100 is reduced and transferred to the plastic housing 200 in a form of heat conduction, thereby effectively improving the heat dissipation efficiency of the first accommodating cavity 210 and the motor bracket 100.

The power head is installed on the tool main body for use. An environment of the tool main body is generally harsh. For example, various cutting operations will cause small debris and dust to splash. In particular, the second external opening 212 is where the air flows inward, which may easily drive debris, dust, etc. into the power head along with the cold wind. In an embodiment of the disclosure, a filter device 700 is installed at the second external opening 212, and the filter device 700 is used to filter debris, dust, etc. in the cold air to prevent the debris, dust, etc. from entering the power head and causing problems such as damage to the power head or reduced heat dissipation effect.

In an embodiment, the second external opening 212 is where the housing 200 is concave into the first accommodating cavity 210 to form a grille-like air inlet. A filter net is installed in a concave part, which may effectively filter out debris, dust, etc. in the cold air. A bottom surface of the concave part is detachably fixed with a grille plate, and the grille plate and the concave part adopt a quick-disassemble structure. For example, the concave part is provided with a clamping opening, and an edge of the grille plate is provided with a V-shaped clamping block, and the clamping block cooperates with a buckle. The grille plate may prevent larger debris, stones, etc. from damaging the filter net without affecting the air intake. It may also restrict the filter net to prevent it from falling off. The quick-disassemble structure may enable it to be easier to replace the filter net and improve maintenance efficiency.

Please refer to FIG. 13 through FIG. 14. Another vertically upward open cavity of the housing body 222 is matched with the flip cover to form the second accommodating cavity 221. The battery pack 226 is assembled in the second accommodating cavity 221. A bottom of the second accommodating cavity 221 is provided with a terminal electrically connected with the battery pack 226. The terminal is connected with the control assembly 211 and the motor. The battery pack 226 may be quickly connected with a power head circuit through the terminal. A back of the second accommodating cavity 221 is a separating board. On one hand, the separating board divides the first accommodating cavity 210 and the second accommodating cavity 221. On the other hand, the separating board may be used to directly fix part of the control assembly 211 to achieve a reasonable arrangement of a structure.

In an embodiment, at least two battery packs 226 may be installed in the housing 200. The two battery packs 226 may be of a same specification or different specifications. The disclosure does not limit this. A corresponding specification of battery pack 226 may be selected according to use requirements of the power head to provide power for the power tool. The two battery packs 500 are connected in parallel to increase a power of the power head. In other embodiments, the two battery packs 500 are connected in series to increase a working voltage of the power head. The two battery packs 500 may also discharge in sequence. When one battery pack 500 is exhausted, the other battery pack 500 starts to discharge, thereby increasing power storage and extending working time. A specific adjustment may be made according to actual needs.

In an embodiment, the two battery packs 226 are arranged on two sides of a forward direction of the power head or front and back along the forward direction. The two battery packs 226 are arranged at intervals. In one embodiment, separating boards are arranged in one-third to two-thirds of the area between the two battery packs 226, and there are gaps between other areas. Through arranging separating boards and gaps, heat accumulation between the two battery packs 226 is avoided, the heat dissipation capacity is improved, and a normal working temperature of the battery pack 226 is ensured. Further, a spring is arranged at a bottom of the battery connecting part 220, and a battery locking component 225 is arranged on a side wall of the battery connecting part 220. When the battery pack 226 is inserted into the battery connecting part 220, the spring is compressed and the battery locking component 225 is locked, thereby locking the battery pack 226 in the battery connecting part 220. When the battery locking component 225 is unlocked, the battery pack 226 is ejected under an elastic force of the spring, which is conducive to a quick removal and placement of the battery pack 226 and improves a replacement speed.

In an embodiment, at least one battery cell group is arranged inside the battery pack 226, and one battery cell group includes a plurality of electrically connected battery cells. The battery cells are connected in series or in parallel to obtain a required voltage. The power head of the disclosure is used to replace the commonly used gasoline engine. As mentioned above, an output power of the power head is from 2 kW to 4 kW. In order to ensure an output of the power head, a voltage of the battery pack is from 80 V to 82 V. The battery cells in the battery pack 226 are connected in series, the voltage of each of the battery cells is 3.6 V, and a number of battery cells in a string is from 22 to 23. The battery pack 226 may have more than one battery cell strings, each battery cell string has an equal number of battery cells, and the battery cell strings are connected in parallel. In an embodiment, a number of the battery cell strings is from 1 to 3. When two battery packs 226 are connected in parallel to discharge the battery, the power head is powered by 2 to 6 battery cell strings in series, ensuring that even if the power head reaches a maximum output power, a discharging current of the battery cells is still within a safety threshold range. In order to ensure a safety and heat dissipation of the battery pack 226, an output power of each battery cell string is less than or equal to 2 kW.

In one embodiment, the battery cell may be a lithium battery cell. The battery pack 226 can be removed from the power head by the user, and the removed battery pack 226 may be installed in other handheld power tools to provide energy for the handheld power tools. That is to say, the battery pack 226 in the disclosure may be applied not only to the power head, but also to other handheld tools. The battery pack 226 in other handheld tools may also be applied to the power head of the disclosure, thereby improving an adaptability of the battery pack and an ability of the power head to adapt to different battery packs 226. It should be noted that, the handheld power tools may be garden tools such as string trimmers, hedge trimmers and blowers, torque output tools such as electric drills and electric hammers, sawing tools such as electric circular saws, jig saws and reciprocating saws, and grinding tools such as angle grinders and sanders. In an embodiment, the battery pack 226 may further power a walk-behind power tool, such as a hand-propelled mower, a hand-propelled snow blower, etc.

In an embodiment, the flip cover 223 is rotatably connected with the housing body 222 and is used to open and close the second accommodating cavity 221 to facilitate the replacement of the battery pack 226. Further, a shaft fixing base is arranged on a top of the separating board of the housing body 222, and a rotation shaft parallel to the separating board of the housing body 222 is arranged on the shaft fixing base. The flip cover 223 is rotatably connected with the battery compartment through the rotation shaft. A rotatable connection between the flip cover 223 and the battery connecting part 220 may facilitate a quick access to the battery pack 226, and also provide a waterproof and dustproof protection for the battery pack 226, thereby extending the duration life of the battery pack 226. A rotation angle between the flip cover 223 and the battery connecting part 220 is limited by a limiting clamping groove, and is adjusted according to an actual condition of the battery pack 226, which is not limited in this disclosure.

In an embodiment, in order to ensure that the flip cover 223 will not open automatically under complex working conditions such as vibration during use, it may be quickly opened only when it is necessary to replace the battery pack 226. A lock 224 is arranged between the flip cover 223 and the housing body 222.

The lock 224 includes a first rotating plate and a second rotating plate that rotate relative to each other, wherein the first rotating plate is rotatably connected with a front end of the battery connecting part 220, and the first rotating plate rotates around a rotating shaft on the battery connecting part 220. The first rotating plate is rotatably connected with the second rotating plate at one end away from the rotating shaft of the battery connecting part 220. The second rotating plate is provided with a clamping part at one end close to the first rotating plate. A front end of the flip cover 223 is provided with a clamping groove matched with the clamping part. When the lock 224 is in an open state, front ends of the first rotating plate and the second rotating plate located on an outer wall of the battery connecting part 220 are in a naturally drooping state. When it is necessary to be locked, the first rotating plate is rotated to vertically upward, and then the second rotating plate is rotated until the clamping part is rotated and inserted into the arc-shaped clamping groove to achieve a locking. The flip cover 223 and the battery connecting part 220 are relatively fixed. In an embodiment, the battery connecting part 220 is a part of the housing body 222. In other words, after being locked, the flip cover 220 and the housing body 222 are relatively fixed.

During the use of the tool main body, working conditions are complicated, and in most cases they are relatively harsh working conditions, which will produce large vibrations. Main vibration sources of the power head include a vibration caused by a rotation of the motor itself and a vibration transmitted from the tool main body. No matter which type of vibration it is, the vibration is transmitted from the motor bracket 100 to the housing 200. The housing 200 is assembled with the easily damaged control assembly 211 and the battery pack 226, which may be easily damaged if a vibration intensity is too strong. Please refer to FIG. 13 through FIG. 15. In an embodiment of the disclosure, a shock absorbing device 800 is arranged between the motor bracket 100 and the housing 200, and the motor bracket 100 and the housing 200 are connected and fixed through the shock absorbing device 800.

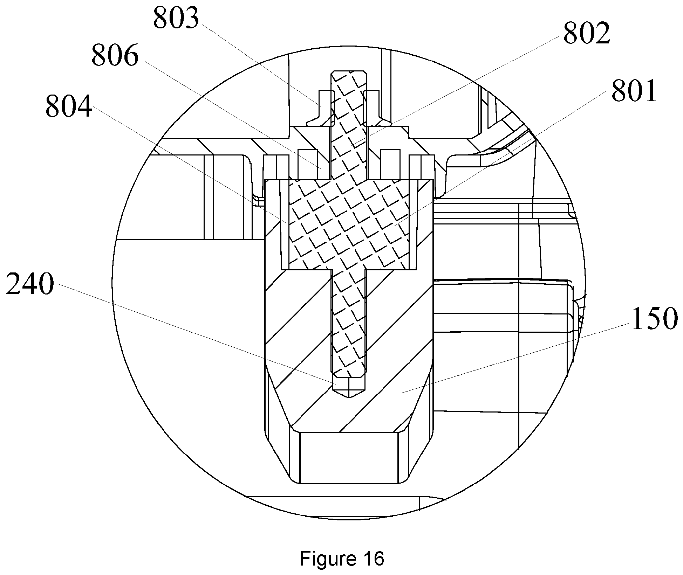

Please refer to FIG. 16. The shock absorbing device 800 includes a shock absorbing pad 801. The shock absorbing device 800 connects and fixes the motor assembly and the housing 200. The shock absorbing pad 801 is arranged between the motor assembly and the housing 200 to provide buffering. The main vibration source of the power head is the motor assembly. The housing 200 is used to fix and protect the control assemblies 211 such as the control board etc. and the battery pack 226. The shock absorbing pad 801 is arranged between the motor assembly and the housing 200, which may effectively filter the vibration caused by the motor assembly and reduce an impact on the control assemblies 211 and battery pack 226 in the housing 200.

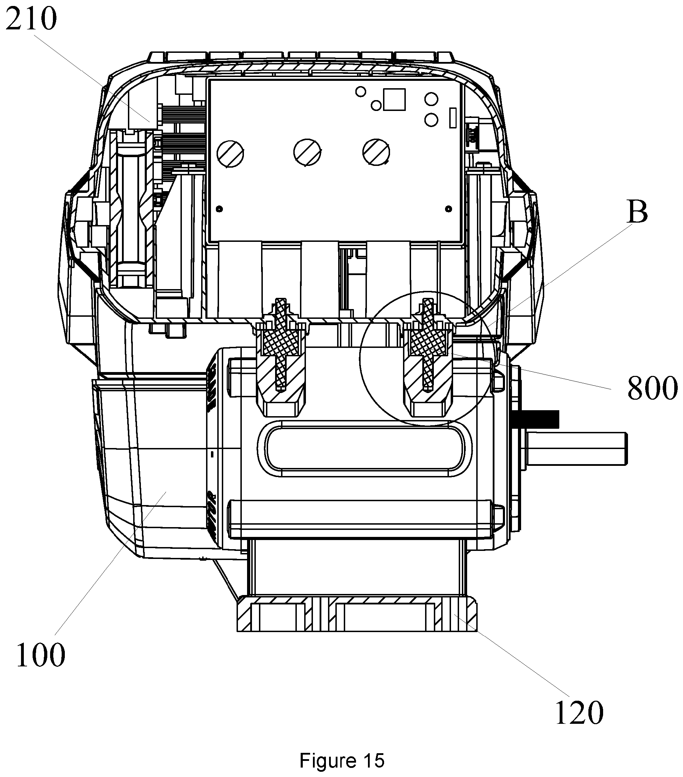

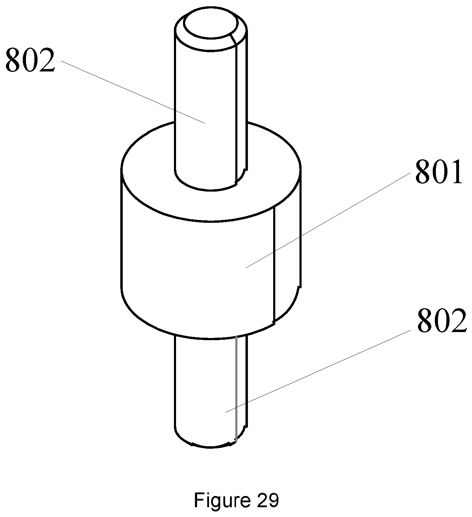

Please refer to FIG. 15 through FIG. 16 and FIG. 29. FIG. 15 is a cross-sectional view taken along line A-A in FIG. 3 of the disclosure, FIG. 16 is an enlarged view of an area B in FIG. 15, FIG. 15 and FIG. 16 show a structure of an exemplary shock absorbing device 800 connecting the motor assembly and the housing 200, and FIG. 29 is a schematic view of an exemplary shock absorbing device 800. In one embodiment of the disclosure, each shock absorbing device 800 further includes two threaded rods 802, and the two threaded rods 802 are respectively fixed on upper and lower sides of the shock absorbing pad 801. A first threaded hole 240 is arranged on the motor bracket 100, and a first through hole 250 is arranged on the housing 200. Positions and numbers of the first threaded hole 240 and the first through holes 250 correspond to each other. The threaded rod 802 on a first side is screwed into the first threaded hole 240, and the threaded rod 802 on a second side passes through the first through hole 250 and is bolted to the first nut 803, thereby realizing a connection between the motor bracket 100 and the housing 200. The shock absorbing pad 801 improves buffering and filters vibration.

Please refer to FIG. 16. In an embodiment of the disclosure, the side wall of the motor bracket 100 is provided with the installation block 150, and the installation block 150 is integrally formed with the motor bracket 100 to ensure a stability of the support. A pad cavity 804 is arranged on a top of the installation block 150, and the first threaded hole 240 is arranged on a bottom of the pad cavity 804. During installation, the threaded rod 802 on the shock absorbing device 800 is screwed into the first threaded hole 240, and the shock absorbing pad 801 is arranged in the pad cavity 804. A surrounding part 805 is arranged on the bottom of the housing 200, and the surrounding part 805 is buckled on a top surface of the pad cavity 804 to seal the pad cavity 804. A compressing part 806 is arranged in the surrounding part 805, and a first through hole 250 is provided in a middle of the compressing part 806. The compressing part 806 compresses the shock absorbing pad 801 to ensure a firm assembly. The other threaded rod 802 passes through the first through hole 250 and is threadedly connected with the first nut 803. The surrounding part 805 is matched with the pad cavity 804 to seal and protect the shock absorbing pad 801, which enables it to be waterproof and dustproof, thereby preventing liquid or dust from damaging the shock absorbing pad 801, slowing down an aging speed of the shock absorbing pad 801 and extending its usage time. It should be noted that, an installation of the shock absorbing device 800 may be adaptively changed according to different usage environments. For example, the pad cavity 804 is arranged on the housing 200. As long as an accommodating cavity is formed to protect the shock absorbing pad 801, the accommodating cavity may be protected from water or dust.

In order to better protect the control assembly 211, in one embodiment, a main body of the housing 200 is the plastic housing 200. The plastic housing 200 has a certain elasticity. When the vibration occurs or the tool falls, in addition to the shock absorbing device 800, the plastic housing 200 may also provide buffering, thereby ensuring that even if the tool falls and causes a large impact, the control assembly 211, battery pack 226, etc. may still be protected and remain intact.

In order to ensure a stability of the assembly, buffering and shock absorbing protection are provided for the control assembly 211 and the battery pack 226. Shock absorbing devices 800 are installed at the bottom of the first accommodating cavity 210 and the bottom of the second accommodating cavity 221 to improve a buffering effect. A weight of the battery pack 226 far exceeds a weight of the control assembly 211, and a number of shock absorbing devices 800 at the bottom of the second accommodating cavity 221 is greater than a number of the shock absorbing devices 800 at the bottom of the first accommodating cavity 210, which saves assembly cost and time while ensuring buffer protection. In an embodiment, two shock absorbing devices 800 are arranged at the bottom of the first accommodating cavity 210, and four shock absorbing devices 800 are arranged at the bottom of the second accommodating cavity 221. The buffer protection is provided for parts such as the control assembly 211 and the battery pack 226 to reduce vibration, the damage caused by vibration is prevented, and the duration life is extended.

In an embodiment, the power head further includes a functional port 1050. When an external extended battery pack is connected with the power head through the functional port 1050, the extended battery pack can provide power to the motor assembly with the battery pack 226 together. Through providing power to the motor assembly together with the extended battery pack 226, an endurance of the power head may be effectively improved. When an external charger is connected with the power head through the functional port 1050, the external charger can charge the battery pack 226. The battery pack 226 is charged through an external charger, and the battery pack 226 does not need to be taken out for charging, so the battery pack 226 is conveniently charged, the operation is convenient and simple, and the endurance of the power head is improved. In this disclosure, there are no restrictions on a shape and power capacity of the extended battery pack. For example, for handheld power tools, such as handheld mowers, the extended battery pack may be carried on a back of a user so that the user may operate the power tool normally when the extended battery pack is in use. For traveling power tools, such as walk-behind and riding mowers, the extended battery pack may be externally installed on the power tool to reduce a load of the worker and reduce labor intensity of the worker. In actual applications, the extended battery pack is selected according to actual conditions. In an embodiment, a shape of the extended battery pack may be of fixed specifications. When in use, the extended battery pack is placed in different storage devices, such as a backpack, an external bag, etc. Different storage devices may be selected according to different usage needs.

In an embodiment, when the extended battery pack is connected with the power head through the functional port 1050, the control module 211 reads information of the extended battery pack and the battery pack 226 to control working states of the extended battery pack and the battery pack 226. In some embodiments, the control module 211 communicates with the extended battery pack through a USART serial port to confirm that the extended battery pack is inserted into the functional port 1050, and reads the information of the extended battery pack in real time, including but not limited to battery voltage, temperature, and discharge current information.

In an embodiment, there are no less than two battery packs 226 for the power head. Taking two battery packs 226 as an example, when the first battery pack 226 and/or the second battery pack 226 are working, after the extended battery pack is connected simultaneously, the control module 211 reads and communicates with the extended battery pack through the USART serial port. According to the read information of the extended battery pack, when voltages are similar, the extended battery pack cuts into a main circuit and discharges in parallel with the battery pack 226 to obtain a larger output power or battery life. The control module 211 connected with the extended battery pack may inform a subsequent driving board of the available current through a serial port communication, so that the subsequent driving board may adjust an output power according to a discharge capacity of the connected extended battery pack. This allows the user to complete the work more efficiently and conveniently, which eliminates an inconvenience of discontinuous work due to repeated charging because of insufficient power, and greatly improves user's experience. In an embodiment, after the control module 211 reads information of the extended battery pack, a voltage difference between the extended battery pack and the battery pack 226 is obtained. When the voltage difference is not greater than a first threshold, the extended battery pack and the battery pack 226 are discharged together. In some embodiments, the first threshold is any value in a range of 3V to 5 V, such as 3 V, 4 V, 5 V, etc. In one embodiment of the disclosure, the first threshold is 3 V. When the voltage difference between the extended battery pack and the battery pack 226 is greater than the first threshold, the extended battery pack or the battery pack 226 with a higher voltage is discharged first, until the voltage difference is not greater than a second threshold, the extended battery pack and the battery pack 226 are discharged together. In some embodiments, the second threshold is any value in a range of 1 V to 2 V, such as 1 V, 2 V, etc. In one embodiment of the disclosure, the second threshold is 1 V. When a total number of extended battery packs and battery packs 226 is greater than 2, through comparing the voltage differences between the battery packs in pairs, when a maximum voltage difference is not greater than the first threshold, all the battery packs are discharged together. When the maximum voltage difference is greater than the first threshold, the battery pack with a highest voltage and the battery pack with the voltage difference not greater than the first threshold are discharged together. Until the voltage difference between the battery pack with the highest voltage and the battery pack to be discharged is not greater than the second threshold, the battery pack to be discharged is discharged together, and so on to achieve a common discharge of all battery packs.

In an embodiment, when the extended battery pack is connected with the power head through the functional port 1050, if the battery pack 226 is not installed in the power head, or the battery pack 226 is in charging or other unusable state, the control module 211 communicates with the extended battery pack in real time through the USART serial port to confirm that the inserted battery pack is the extended battery pack. The control module 211 detects the information of the extended battery pack in real time, including the battery voltage, the temperature, the discharge current and other information, and the extended battery pack discharges independently. The control module 211 communicates the information of the extended battery pack to the subsequent driving board, and the subsequent driving board adjusts the output power according to the information of the extended battery pack, thereby avoiding abnormalities or damage caused by extreme discharge such as over-discharge and over-temperature of the extended battery pack, thereby increasing the duration life of the extended battery pack. By an independent discharge of the extended battery pack, when the battery pack 226 is low on power or in other unusable states, the power head may be kept in the working state, thereby ensuring a continuity of working.

In an embodiment, the battery assembly includes a charging switch. When the control module 211 detects that the charging switch is turned on and determines that the battery pack 226 needs to be charged, the battery pack 226 is charged through an external charger connected with the functional port 1050.

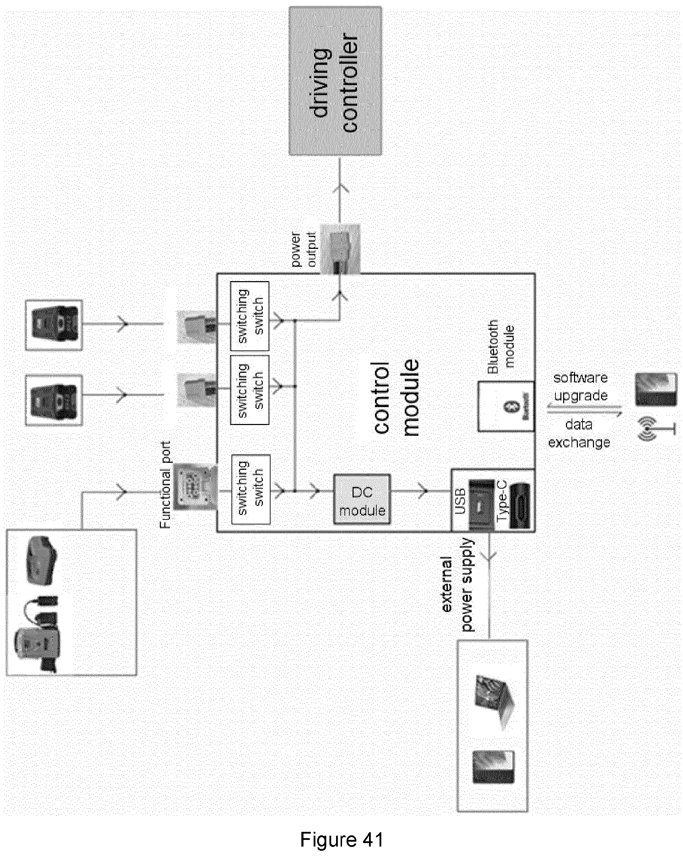

Please refer to FIG. 41. In an embodiment, when the external charger is connected with the power head through the functional port 1050, the control module 211 is activated and powered on. If it is detected that the charging switch is turned on and it is determined through communication that the battery pack 226 needs to be charged, the control module 211 switches to a charging mode. The control module 211 detects a number of battery packs 226 inserted. If only one battery pack 226 is inserted, the inserted battery pack 226 is charged. If two normal battery packs 226 are inserted, the voltage difference between the two battery packs 226 is first determined. If the voltage difference between the two battery packs 226 is not greater than a third threshold, the two battery packs 226 are charged simultaneously. The third threshold is any value between 3 V and 5 V, such as 3 V, 4 V, 5 V, etc. In one embodiment of the disclosure, the third threshold is the same as the first threshold, which is 3 V. If the voltage difference between the two battery packs 226 is greater than the third threshold, the battery pack 226 with the lower voltage is charged first. Until the voltage difference between the charged battery pack 226 and the battery pack 226 to be charged is no greater than a fourth threshold, the battery pack 226 to be charged is then connected and the two battery packs 226 are charged together. In some embodiments, the fourth threshold is any value between 1 V and 2 V, such as 1 V, 2 V, etc. In one embodiment of the disclosure, the fourth threshold is the same as the second threshold, which is 1 V. When the two battery packs 226 are fully charged, the control module 211 closes a charging channel. In an embodiment, a warning light is arranged on the power head. When the battery pack 226 is fully charged, the warning light turns green to indicate that the charging is completed, so that a staff may better find out that the charging is completed and remove the external charger in time.

Please refer to FIG. 41. In an embodiment, the battery assembly includes a switching switch, and the control module 211 may switch the battery pack 226 to a charging mode or a discharging mode through the switching switch to meet charging and discharging needs of the battery pack 226.

In an embodiment, the external charger may be an AC/DC charger. When the AC/DC charger is inserted into the functional port 1050, the control module 211 detects that the charging switch is turned on. When the battery pack 226 needs to be charged, it is confirmed that the battery pack 226 enters a charging state through CAN or serial port communication. The control module 211 controls the switching switch to the charging channel and the battery pack 226 enters the charging mode.

In an embodiment, the external charger is a solar inverter charger. A principle of charging the battery pack 226 by the solar inverter charger is as described above and will not be repeated here. Charging the battery pack 226 through the solar inverter charger may effectively improve an adaptability of the power head to outdoor work. For some remote areas or outdoor areas where ordinary household or industrial electricity cannot be directly reached, charging the battery pack 226 through the solar inverter charger is beneficial to improving a field applicability of the power head and meeting use requirements of different environments. Charging the battery pack 226 through the solar inverter charger can also save energy and protect environment, further improving an environmental protection effect.

In an embodiment, the external charger is a DC/DC charger. When the functional port 1050 is connected with the external DC/DC charger, the plurality of battery packs 226 is charged separately or simultaneously. A charging principle is as described above and will not be repeated here.

In an embodiment, there is a plurality of functional ports 1050, and the extended battery pack and the external charger may be connected with the power head at the same time. The external charger includes one of the AC/DC charger, the solar inverter charger and the DC/DC charger. At this time, the external charger may not only charge the battery pack, but also charge the extended battery pack.

Please refer to FIG. 41. With an increasing application of electronic devices, an application of obtaining power head information and controlling power heads through mobile phones, tablets, computers, remote controls, etc. has become more widespread. Mobile phones, tablets, computers and other electronic devices have limited battery life, and the battery runs out frequently during use. To facilitate the staff to use electronic devices and avoid a situation where the electronic devices run out of battery and cannot be used, in an embodiment of the disclosure, the battery assembly includes a USB and/or type-C output port, and the USB output port may be connected with an external USB cable to meet a variety of usage needs. In an embodiment, the type-C output port supports a PD communication protocol and may charge mobile phones, tablets, computers, etc. Through automatically identifying a voltage standard of the mobile phone or computer, the voltage of the battery pack 226 is DC-DC stepped down to meet a power supply standard of electronic devices such as mobile phones or computers. When there is no AC socket available outdoors, the user may charge electronic devices such as mobile phones or computers to meet the needs of staff.

Conventional product users cannot intelligently read various information of the power head or tool, nor can they upgrade a program through Internet. In an embodiment of the disclosure, the power head includes a Bluetooth module. Users may connect to the Bluetooth module through a mobile phone APP to view various information of the power head, such as the power of the battery pack 226, cumulative operating time, remaining working time, historical faults and other information. The above information may be uploaded to a cloud through the mobile phone APP, so that a manufacturer may analyze and improve the power head and enhance the user's experience. The mobile phone APP may obtain upgraded data package through the network, and then update a software version of the power head through the connection between the mobile phone APP and the Bluetooth module to fix possible BUGs or hidden dangers. It may also obtain the latest operating methods, enable more functions, etc., which effectively improves the user's experience.

The disclosure further provides a power system, and the power system includes the power head and an external device. Wherein, the power head includes a whole casing 1, a motor assembly and a battery assembly. The whole casing 1 includes the motor bracket 100 and the housing 200. The motor assembly is assembled in the motor bracket 100, the motor assembly drives a working part to work, and the battery assembly is assembled in the housing 200. The battery assembly includes the battery pack 226, the control module 211 and the functional port 1050.

The external device includes the extended battery pack and/or the external charger, and the external charger includes at least one of the AC/DC charger, the solar inverter and the DC/DC charger. Wherein, when the functional port is connected with the external charger, the external charger can charge the battery pack, which may facilitate the charging of the power head and improve the endurance of the power head. When the functional port 1050 is connected with the external extended battery pack, the extended battery pack can jointly provide power for the motor assembly with the battery pack, thereby increasing an output power of the power head and improving the endurance of the power head. It should be noted that, a part and a relative connection relationship that are not described in detail in the above-mentioned power systems may refer to the conventional corresponding power systems, and the disclosure will not be repeated here.

Functional port 1050 may be connected with an external extended battery pack with a same platform and an external charger with the same platform. The external charger includes the solar inverter charger, the AC/DC charger, the DC/DC charger, etc., which facilitates charging the battery pack 226 in different ways and improves the endurance. The extended battery pack may discharge together with the battery pack 226 or discharge independently through the functional port 1050, thereby increasing the output power and extending the battery life.

Therefore, the disclosure effectively overcomes some practical problems in the prior art, thereby having high utilization value and use significance. The above embodiments only illustrate principles and effects of the disclosure, but are not intended to limit the disclosure. Anyone familiar with this technology may modify or change the above embodiments without departing from a scope of the disclosure. Therefore, all equivalent modifications or changes made by those with ordinary knowledge in the technical field without departing from the technical ideas disclosed in the disclosure shall still be covered by the claims of the disclosure.

## Claims

1. A power head, comprising:
a motor bracket, the motor bracket provided with a motor assembly cavity, and a bottom of the motor bracket provided with a machine installation surface;
a housing, the housing fixed above the motor bracket, and a gap formed between the housing and the motor bracket;
a motor, the motor comprising a motor stator, a motor rotor and an output shaft;
the motor stator fixedly assembled in the motor assembly cavity;
the motor rotor assembled in the motor assembly cavity and rotating with respect to the motor stator;
the output shaft fixed with the motor rotor, and the output shaft being substantially parallel to the machine installation surface; and
a battery pack, the battery pack installed in the housing to provide energy for the power head.

2. The power head according to claim 1, wherein, the motor bracket is integrally formed, and comprises a motor assembly part provided with the motor assembly cavity, a machine installation part arranged below the motor assembly part, and a battery supporting part arranged on a side of the motor assembly part, and the battery pack is arranged above the battery supporting part.

3. The power head according to claim 2, wherein, the motor assembly part is provided with a installation block, the installation block is fixed to a bottom surface of the housing, the gap is arranged between the housing and an outer wall of the motor assembly part, a first accommodating cavity to install a control module is arranged in the housing, the first accommodating cavity is arranged above the motor assembly cavity, the first accommodating cavity and the motor assembly cavity are connected through a second internal opening arranged in the housing and a first internal opening arranged in the motor bracket, and the housing is in contact with a wall of the motor assembly cavity through the installation block and the first and second internal openings.

4. The power head according to claim 2, wherein, the motor bracket further comprises a reinforcing supporting part, a first end of the reinforcing supporting part is arranged on the whole machine installation part, and a second end of the reinforcing supporting part is arranged on a bottom surface of the battery supporting part.

5. The power head according to claim 1, wherein, a center of gravity of the power head is located between left and right offset surfaces of the power head perpendicular to a center plane of the output shaft, and a distance between the left or right offset surface and the center plane is no more than 15 percent of a width of the power head.

6. The power head according to claim 1, wherein, a center of gravity of the power head is located between the motor assembly cavity and the housing in a longitudinal direction.

7. The power head according to claim 1, wherein, a center of gravity of the power head is located between an outer wall of the motor assembly cavity and the battery pack.

8. The power head according to claim 1, wherein, a maximum output power range of the motor is from 3 kW to 5kW, the battery pack is capable of being installed on a handheld power tool to provide power to the handheld power tool, the battery pack comprises at least one group of battery cells, the battery cells are connected in series, a maximum output power of the battery cells is less than or equal to 2 kW, a voltage of the battery pack is from 80 V to 82 V, a control wire is arranged between the power head and the power tool driven by the power head, and an on-off of the power head are controlled according to a state of the power tool.

9. The power head according to claim 1, further comprising a heat dissipation passage, wherein,
the motor assembly cavity is communicated with outside air through a first external opening;
a first accommodating cavity to assemble the control module is arranged in the housing, a second external opening is arranged on the first accommodating cavity; and
the heat dissipation passage is communicated in sequence to the first external opening, the motor assembly cavity, the first accommodating cavity, and the second external opening.

10. The power head according to claim 9, wherein, a first fan is arranged in the heat dissipation passage, and the first fan is arranged on the output shaft of the motor rotor.

11. The power head according to claim 10, wherein, the first fan is arranged at a tail end of the output shaft and at a top of the first external opening, the outside air enters the first accommodating cavity through the second external opening, flows through a coil winding assembled on the motor assembly cavity, and is then driven by the first fan to be discharged through the first external opening, a second fan is arranged in the heat dissipation passage, the second fan is arranged on a side wall of the first accommodating cavity, and an air outlet direction of the second fan is perpendicular to a ventilation direction of the second external opening.

12. The power head according to claim 10, wherein, the first fan is arranged at a front end of the output shaft, and the first accommodating cavity and the motor assembly cavity are respectively arranged on two sides of the first fan in the heat dissipation passage.

13. The power head according to claim 9, wherein, the heat dissipation passage comprises a first internal opening and a second internal opening;
the first internal opening is arranged at a top of the motor assembly cavity on a side away from the first external opening; and
the second internal opening is communicated with the first internal opening, and the second internal opening is arranged at a bottom of the first accommodating cavity on a side away from the second external opening.

14. The power head according to claim 13, wherein, the first external opening passes through the motor bracket downwards, a ventilation groove is arranged on a bottom side wall of the motor bracket, the first external opening is communicated with the outside air through the ventilation groove, and the second external opening is arranged on a bottom surface of the housing.

15. The power head according to claim 1, further comprising a shock absorbing device, wherein,
a shock absorbing device, the shock absorbing device comprises a shock absorbing pad,
wherein, the housing and the motor bracket are connected through the shock absorbing device, and the shock absorbing pad is arranged between the housing and the motor bracket.

16. The power head according to claim 15, wherein, the shock absorbing device comprises two threaded rods, the two threaded rods are respectively arranged on two sides of the shock absorbing pad and are respectively connected with the corresponding housing and the motor bracket on the two sides of the shock absorbing pad, a first threaded hole is arranged on the motor bracket, a first through hole is arranged on the housing, the threaded rod on a first side of the shock absorbing pad is matched with the first threaded hole, and the threaded rod on a second side of the shock absorbing pad passes through the first through hole and is threadedly connected with a first nut.

17. The power head according to claim 1, further comprising a functional port, wherein,
when the functional port is connected with an external charger, the external charger is capable of charging the battery pack; and
when the functional port is connected with an external extended battery pack, the extended battery pack is capable of providing electrical energy to the motor together with the battery pack.

18. The power head according to claim 17, further comprising a control module, wherein, when the functional port is connected with the external extended battery pack, the control module is configured to read information of the extended battery pack and the battery pack to control a working state of the extended battery pack and the battery pack, the working state comprises that the extended battery pack and the battery pack discharge together and the extended battery pack discharges independently, the information of the extended battery pack and the battery pack comprises respective battery voltage, temperature, and discharging current.

19. The power head according to claim 18, wherein, during an initial operation, when a voltage difference between the extended battery pack and the battery pack is not greater than a first threshold, the extended battery pack and the battery pack are discharged together, and when the voltage difference between the extended battery pack and the battery pack is greater than the first threshold, the one with a higher voltage between the extended battery pack and the battery pack is discharged first, until the voltage difference is not greater than a second threshold, and then the extended battery pack and the battery pack are discharged together.

20. The power head according to claim 19, wherein, when the battery pack is not installed or is in an unavailable state, the extended battery pack discharges independently, the control module communicates to inform a subsequent driving board with the information of the extended battery pack, and the subsequent driving board adjusts an output power according to the information of the extended battery pack.

21. The power head according to claim 19, wherein, the control module detects number of the battery packs inserted, if only one battery pack is inserted, the inserted battery pack is charged, if two battery packs are inserted, a voltage difference between the two battery packs is determined, if the voltage difference between the two battery packs is within a third threshold range, the extended battery pack charges the two battery packs simultaneously, if the voltage difference between the two battery packs exceeds a second threshold range, the battery pack with a lower voltage is charged until the voltage difference between the two battery packs is within a fourth threshold range, then the two battery packs are charged simultaneously.

22. A power system, comprising a power head and an external device, wherein the power head comprises:
a motor bracket, the motor bracket provided with a motor assembly cavity, and a bottom of the motor bracket provided with a machine installation surface;
a housing, the housing fixed above the motor bracket, and a gap formed between the housing and the motor bracket;
a motor, the motor comprising a motor stator, a motor rotor and an output shaft;
the motor stator fixedly assembled in the motor assembly cavity;
the motor rotor assembled in the motor assembly cavity and rotating with respect to the motor stator;
the output shaft fixed with the motor rotor, and the output shaft being substantially parallel to the machine installation surface; and
a battery pack, the battery pack installed in the housing to provide energy for the power head; wherein
the external device comprises an extended battery pack and/or an external charger, and the external charger comprises at least one of an AC/DC charger, a solar inverter, and a DC/DC charger;
wherein, when a functional port is connected with the external charger, the external charger is capable of charging the battery pack; and
when the functional port is connected with the external extended battery pack, the extended battery pack is capable of providing electrical energy to the motor together with the battery pack.
